(19) **Europäisches Patentamt**
**European Patent Office**
**Office européen des brevets**

(11) **EP 4 242 934 A1**

(12) **EUROPEAN PATENT APPLICATION**

(43) Date of publication:
**13.09.2023 Bulletin 2023/37**

(21) Application number: **22160629.6**

(22) Date of filing: **07.03.2022**

(51) International Patent Classification (IPC):
**G06N 10/60** $^{(2022.01)}$    **G06N 20/10** $^{(2019.01)}$
**G06N 10/40** $^{(2022.01)}$

(52) Cooperative Patent Classification (CPC):
**G06N 10/60; G06N 20/10;** G06N 10/20;
G06N 10/40

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Qu&CO R&D B.V.**
**1071 LE Amsterdam (NL)**

(72) Inventors:
• **Elfving, Vincent Emanuel**
**1071 LE Amsterdam (NL)**
• **Paine, Anna Emma**
**1071 LE Amsterdam (NL)**
• **Kyriienko, Oleksandr**
**1071 LE Amsterdam (NL)**

(74) Representative: **De Vries & Metman**
**Overschiestraat 180**
**1062 XK Amsterdam (NL)**

(54) **QUANTUM-KERNEL-BASED REGRESSION**

(57) Methods and systems are disclosed for solving a regression problem, for example a data regression problem and/or a differential equation problem, over a problem domain using a hybrid computer system. The hybrid computer system comprises a quantum computer system and a classical computer system. The method comprises receiving or determining, by the classical computer system, a regression problem description and a set of kernel points in the problem domain. The method may further comprise receiving or determining, by the classical computer system, a trial function associated with the regression problem, the trial function being based on a quantum kernel and being parameterized by one or more kernel coefficients. The quantum kernel may be based on an overlap of two wave functions. The method further comprises determining, using the quantum computer system, for each of the kernel points, a kernel value of the quantum kernel and/or a kernel derivative value of a derivative of the quantum kernel. The method further comprises determining, by the classical computer system, a set of optimal kernel coefficients based on the kernel value and/or kernel derivative value and determining, by the classical computer system, a solution function based on the trial function and the set of optimal kernel coefficients.

Fig. 8A

EP 4 242 934 A1

**Description**

<u>Technical field</u>

The disclosure relates to solving regression problems using a quantum kernel, and in particular, though not exclusively, to methods and systems for solving regression problems using a quantum kernel, and to a computer program product enabling a computer system to perform such methods.

<u>Background</u>

Quantum computing is fundamentally different to classical computing. The quantum computer's structure gives access to quantum-mechanical properties such as superposition and entanglement which are not available to classical computers. For certain problems, quantum computers offer drastic computational speed-up, ranging from quadratic acceleration of searching unstructured data, to exponential improvements for factoring large numbers used in encryption applications. Using qubits and coherent superpositions of binary strings, quantum computers utilize quantum interference effects to amplify the correct solution, reached in fewer steps than classical computers ever can. Another promising application is machine learning, where a quantum computer benefits from access to an exponentially large feature space, enabling efficient modelling of highly complex problems.

However, many of these quantum computer algorithms have requirements that are not met by current and near-term device limitations, and therefore, their practical implementation is only a long-term goal. Current and near-term quantum computers are often referred to as Noisy, Intermediate-Scale Quantum computers (NISQ). This is due to the limitation in number of qubits in these devices and the lack of error correction to deal with noise. As the noise scales with the depth of quantum circuits, this, in turn, limits the effectively available depth of quantum circuits. Finding useful applications for such devices is an area of active research so that the advantages of quantum computation can be utilised now or near-term, rather than waiting for hardware developments.

Algorithms for NISQ devices are designed with these limitations in mind, and typically seek to avoid and/or mitigate them. Often, these algorithms make use of a hybrid structure, i.e., splitting computation between classical and quantum systems. This way, the part that is hard for classical computers can be computed with the quantum computer, gaining access to the benefits of quantum computations, whilst the remaining computations are executed by a classical device. This restricts the work implemented on the quantum computer and therefore poses lower requirements on the quantum computer.

One class of algorithms that are often implemented on these hybrid computers are variational methods. For these methods, the problem to be solved is formulated as an optimisation problem. The solution of the problem requires optimising a trial function, which in these methods includes measurements of parametrised quantum circuits (i.e., a circuits which include gates with adjustable parameters). A classical optimiser is used to optimise the parameters of these circuits for the problem considered, but quantum computations are required for each optimisation step. An example of a hybrid variational algorithm is quantum circuit learning, as described in US 2020/0394550 A1.

Some of these optimisation problems use kernel methods. Classical kernel methods have been applied to, inter alia, classification problems such as support vector machines, and regression problems such as data regression problems and differential equation regression problems. Classical kernel methods are limited by expressibility for higher dimensional problems and by efficiently solving large systems of equations. The use of quantum kernels can mitigate these problems. In particular, quantum computing uses exponentially large feature space, and hence, quantum kernels can offer a feature richness that is not obtainable using classical computers in acceptable computation time. Hence, quantum kernels have been proposed for various quantum machine learning processes. Indeed, it has been shown that most supervised quantum machine learning algorithms can be cast as kernel methods. However, solving optimisation problems on a quantum computer is relatively slow and expensive, and limits the use of these methods.

In other areas of research, quantum algorithms have been proposed for solving differential equations, some of which consider near-term implementation and use the variational hybrid structure. Solving differential equations is essential in many diverse fields, and many (classical) ways have been developed to solve these systems, both analytical and numerical. However, some instances of differential equations are still hard and inefficient to solve. These systems are often those with high degrees of non-linearity, high dimensionality or simply very large systems of differential equations. Thus, developing new techniques to solve differential equations is of interest to many different fields including physics, chemistry, biology, and finance.

Hence, from the above, it follows that there is a need in the art for systems and methods that can solve regression problems, and in particular differential equation regression problems, that employ the high-dimensional feature space of a quantum computer yet minimise the computations performed by the quantum computer.

## Summary

It is an aim of embodiments in this disclosure to provide a system and method for solving regression problems that avoids, or at least reduces the drawbacks of the prior art. Embodiments are disclosed that solve regression problems, such as data regression problems and differential equation regression problems, using quantum kernels.

In a first aspect, this disclosure relates to a method for solving a regression problem, for example a data regression problem and/or a differential equation problem, over a problem domain using a hybrid computer system. The hybrid computer system comprises a quantum computer system and a classical computer system. The method comprises receiving or determining, by the classical computer system, a regression problem description and a set of kernel points in the problem domain. The method may further comprise receiving or determining, by the classical computer system, a trial function associated with the regression problem, the trial function being based on a quantum kernel and being parameterized by one or more kernel coefficients. The quantum kernel may be based on an overlap of two wave functions. The method further comprises determining, using the quantum computer system, for each of the kernel points, a kernel value of the quantum kernel and/or a kernel derivative value of a derivative of the quantum kernel. The method further comprises determining, by the classical computer system, a set of optimal kernel coefficients based on the kernel value and/or kernel derivative value and determining, by the classical computer system, a solution function based on the trial function and the set of optimal kernel coefficients.

In this disclosure, a quantum kernel refers to a function which fulfils the requirements of a kernel (i.e., a conjugate-symmetric, positive-definite function of two variables) and which is evaluated using quantum computation. More typically, a quantum kernel is based on interaction of two wave functions, the two wave functions encoding the kernel variables. For example, a kernel $\kappa(x,y): X \times X \to \mathbb{C}$ may be defined by $\kappa(x,y) = f(\langle \psi(x)|\psi(y)\rangle)$, where $\psi(x)$ and $\psi(y)$ denote wave functions encoded with variables $x \in X$ and $y \in X$, respectively, and wherein $f(z): \mathbb{C} \to \mathbb{C}$ is chosen such that $\kappa(x,y)$ is a positive-definite function. A trial function $f_\alpha(x)$ can typically be written as $f_\alpha(x) = \sum_{i=1}^{N} \alpha_i \kappa(x, y_i) + \alpha_0$, where $\{\alpha_i\}_{i=0}^{N}$ is a set of optimisable parameters. As the optimisation problem is linear in the optimisable parameters $\alpha_i$, the optimisation can typically be written in a convex form. Consequently, any minimum is guaranteed to be a global minimum, and the convergence of the optimisation is bounded by well-known bounds. Because the kernel values $\kappa(x,y_i)$ and the optimisable parameters $\alpha_i$ are independent of each other, the kernel values need to be computed only once at the start of the optimisation. Thus, while the kernel values are computed using the quantum computer, the optimisation can be done completely by the classical computer. As the quantum computing does not scale with the number of iterations, this reduces the number of computations on the quantum computer (compared to an algorithm where each optimisation step requires computations on the quantum computer, such as variational algorithms). This, in turn, reduces limits on the number of iterations, potentially increasing the accuracy. The use of quantum kernels as fitting functions provide the advantage of large function expressibility.

In an embodiment, determining the kernel value and/or the kernel derivatieve value comprises encoding a first variable $x$ in the problem domain into a first wave function $|\psi(x)\rangle$ using a first feature map and encoding a second variable $y$ in the problem domain into a second wave function $|\psi(y)\rangle$ using a second feature map. The second feature map may be either the same as the first feature map, or an Hermitian of the first feature map. For example, a unitary operator $\mathcal{U}$ may be used to define $|\psi(x)\rangle = U(x)|0\rangle$ and $|\psi(y)\rangle = U(y)|0\rangle$. The method may further comprise determining the overlap $\langle \psi(x)|\psi(y)\rangle$ of the first and second wave functions or a function thereof. The function may include an expectation value $|\langle \psi(x)\psi(y)\rangle|^2$.

The second wave function can be a combined wave function $|\psi(x,y)\rangle$ encoding both the first variable $x$ and the second variable $y$. For example, the unitary operator $\mathcal{U}$ may be used to define $|\psi(x,y)\rangle = U^\dagger(x) U(y)|0\rangle$. The method may then comprise determining the overlap $\langle 0|\psi(x,y)\rangle = \langle \psi(x)|\psi(y)\rangle$ of the combined wave function with a zero state or a function thereof. The function may include an expectation value $|\langle 0|\psi)(x,y)\rangle|^2$.

These kinds of quantum kernels are relatively easy to implement in hardware. The operator $\mathcal{U}$ used to encode the variables into wave functions may be referred to as a kernel feature map. In general, the expressibility of the kernel depends on the complexity of the kernel feature map. In an embodiment, the kernel feature map is a non-linear function.

In an embodiment, determining the kernel value and/or the kernel derivative value comprises determining an expectation value $|\langle \psi(x)|\psi(y)\rangle|^2$ of the overlap of the first and second wave functions. Determination of the expectation value may involve performing a controlled SWAP-test and/or measuring an amplitude of a zero state of qubits encoding the first variable $x$ and/or the second variable $y$. The controlled SWAP-test may be performed on the first wave function $|\psi(x)\rangle$ and the second wave function $|\psi(y)\rangle$, the first wave function being encoded in a first register and the second wave function being encoded in a second register.

In an embodiment, encoding the first and second variables comprises executing a unitary operation. The unitary operation may be controlled by an ancilla. Determining the kernel value and/or the kernel derivative value may comprise determining an overlap $\langle \psi(x)|\psi(y)\rangle$ of the first and second wave functions may comprise performing an Hadamard-test on the ancilla.

In an embodiment, the method further comprises determining a function value for an evaluation point. The determination of the function value may comprise receiving or determining, by the classical computer system, the evaluation point, determining, using the quantum computer system, for each of the kernel points, a kernel value of the quantum kernel for the evaluation point, and determining, by the classical computer system, the function value based on the evaluated kernel values and the set of optimal kernel coefficients.

In an embodiment, the regression problem includes a differential equation problem. In such an embodiment, the determination of the kernel derivative value step may comprise the determination of one or more derivatives of the quantum kernel. Highly complex and/or very large systems of equations may be modelled efficiently this way. The high expressibility of the quantum kernels allows to find numerical solutions that are rich in features.

In an embodiment, the regression problem includes data regression. In such an embodiment, the regression problem description may comprise a set of training data in the problem domain and associated training values. The use of quantum kernels allows modelling of highly complex data structures.

In an embodiment, the regression problem description includes a linear optimization problem. In such an embodiment, determination of the set of optimal kernel coefficients may comprise solving a set of linear equations. For example, the regression problem may be solved using a support vector regression (SVR) approach. This is a well-known approach to optimise a kernel-based trial function, and may be used to solve, e.g., data regression problems and/or differential equation regression problems. Using a support vector regression approach, the optimisation problem is expressed in a way such that a method known as the kernel trick can be used. Typically, this requires reformulating the problem in its dual form, determining the problem's Lagrangian, and applying the Karush-Kuhn-Tucker (KKT) optimality conditions. This kernel trick then changes the problem from expressing the trial function in terms of an unknown, potentially high-dimensional set of fitting functions into an expression in terms of kernel evaluations. Thus, the kernel trick can give the benefit of complicated, high-dimensional fitting functions without having to ever directly evaluate these fitting functions. The support vector regression approach results in either a set of linear equations or in a non-linear system of equations to solve. Depending on the resulting system of equations, the system of equations can be solved using, e.g., linear algebra solvers or using a loss function. The use of a loss function can be especially useful when considering problems resulting in non-linear systems of equations.

In an embodiment, the regression problem description comprises a loss function. In such an embodiment, determination of the set of optimal kernel coefficients may comprise minimising the loss function. For example, a mixed-model regression (MMR) approach may be used. Compared to the support vector regression approach, the mixed-model regression approach may require fewer kernel evaluations. Which approach is more efficient depends on the details of the problem, such as the convexity of the optimisation problem.

In an embodiment, the quantum kernel depends on one or more hyperparameters. In such an embodiment, the method may further comprise determining, by the classical computer system, a derivative of a loss function with respect to the one or more hyperparameters. The determination of the set of optimal kernel coefficients may be based on the determined derivative of the loss function with respect to the one or more hyperparameters. The use of hyperparameters can further improve the quality of the solution function and/or may increase the optimisation speed.

In an embodiment, the determination of the kernel value and/or the kernel derivative value comprises receiving or determining, by the classical computer system, a formulation of quantum circuits representing the quantum kernel and/or its derivative representations with respect to one or more variables in the problem domain. The determination of the kernel value and/or the kernel derivative value for each of the kernel points may further comprise performing, by the classical computer system, the steps of translating the quantum circuits into first control signals for controlling quantum elements of the quantum computer system, determining second control signals for readout of the quantum elements to obtain hardware measurement data, controlling the quantum computer system based on the first and second control signals, receiving, in response to the execution of the quantum circuits, the hardware measurement data, and processing the hardware measurement data into the kernel value and/or the kernel derivative value.

In an embodiment, the first control signals include a sequence of pulses and the second control signals include applying a read-out pulse to the quantum elements of the quantum computer system.

In a further aspect, this disclosure relates to a hybrid computer system solving a regression problem over a problem domain using a hybrid computer system. The hybrid computer system comprising a quantum computer system and a classical computer system. The system is configured to perform executable operations, the executable operations comprising the steps of receiving or determining, by the classical computer system, a regression problem description and a set of kernel points in the problem domain, receiving or determining, by the classical computer system, a trial function associated with the regression problem, the trial function being based on a quantum kernel and being parameterized by one or more kernel coefficients, preferably the quantum kernel being based on an overlap of two wave functions, determining, using the quantum computer system, for each of the kernel points, a kernel value of the quantum kernel and/or a kernel derivative value of a derivative of the quantum kernel, determining, by the classical computer system, a set of optimal kernel coefficients based on the kernel value and/or kernel derivative value, and based on the regression problem description, and determining, by the classical computer system, a solution function based on the trial function and the set of optimal kernel coefficients.

In further embodiments, the hybrid system may be configured to perform any of the method steps defined above. In particular, the executable operations may comprise any of the method steps defined above.

One aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present disclosure may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached schematic drawings. It will be understood that the disclosure is not in any way restricted to these specific embodiments. Identical reference signs refer to identical, or at least similar elements.

Brief description of the drawings

**Fig. 1A** and **1B** illustrate different types of regression problems that can be solved using embodiments in this application;

**Fig. 2A** and **2B** illustrate the use of kernel functions to solve a regression problems;

**Fig. 3** schematically depicts a flow diagram of a method for solving a regression problem using a quantum kernel according to an embodiment;

**Fig. 4A** and **4B** schematically depicts a flow diagram of a method for solving a data regression problem using a quantum kernel according to an embodiment;

**Fig. 5** schematically depicts a flow diagram of a method for solving a differential equation regression problem using a quantum kernel according to an embodiment;

**Fig. 6A-6E** depict quantum circuits according various embodiments;

**Fig. 7A-F** depict circuit diagrams for evaluating a quantum kernel, respectively a derivative thereof, according to various embodiments;

**Fig. 8A** and **8B** schematically depict a method for solving a regression problem using a quantum kernel according to an embodiment;

**Fig. 9A-D** schematically depict hardware-level schematics illustrating the application of logical operations to qubits using a quantum circuit;

**Fig. 10** depicts results for solving a data regression problem using a quantum kernel according to an embodiment;

**Fig. 11A** and **11B** depict results for solving a linear differential equation regression problem using a quantum kernel according to an embodiment;

**Fig. 12A-D** depict results for solving a non-linear differential equation regression problem using a quantum kernel according to an embodiment; and

**Fig. 13A** and **13B** are block diagrams illustrating, respectively, an exemplary hybrid data processing system and an exemplary classical data processing system that may be used for executing methods and software products described in this disclosure.

Detailed description

A kernel is, in general, defined as a conjugate-symmetric positive-definite function $\kappa$ mapping two variables $x, y \in X$, where $X$ is some data space to the complex space, $\kappa: X \times X \rightarrow \mathbb{C}$. The data space $X$ is typically the $\mathbb{C}^n$ or a

subspace thereof, e.g., the $\mathbb{R}^n$. A kernel may thus be considered as a generalisation of an inner product that does not need to meet the constraint of being linear.

It has been shown that any kernel can be written as a (standard) inner product (or dot product) in a, usually, higher dimensional feature space; that is, any kernel $\kappa(x,y)$ can be written as $\kappa(x,y) = \varphi(x)^\dagger \varphi(y)$ where $\varphi\colon X \to F$ is a mapping from the data space to the feature space. Typically, the dimension of $F$ is much higher than the dimension of $X$, and may even be infinite. Conversely, a (standard) inner product $\varphi(x)^\dagger \varphi(y)$ in the feature space always represents a valid kernel in the data space. This equivalence is known as the "kernel trick" and is widely used in machine learning algorithms. This kernel trick is a consequence of Mercer's theorem - which, in its simplest case, is the statement that for any symmetric, positive-definite function $f(s, t)$ there exists a countable set of functions $\{\phi_i\}_i$ such that $f(s, t)$ can be expressed as $f(s, t) = \sum_i \phi_i(s)\phi_i(t)$.

Quantum computers can access an exponentially large feature space, making them good candidates to model a function in the high-dimensional features space. In principle, a wave function defined by $N$ qubits lives in a $2^N$-dimensional feature space. Thus, methods employing quantum kernels can employ the benefits of a very high-dimensional feature space using only a limited amount of qubits.

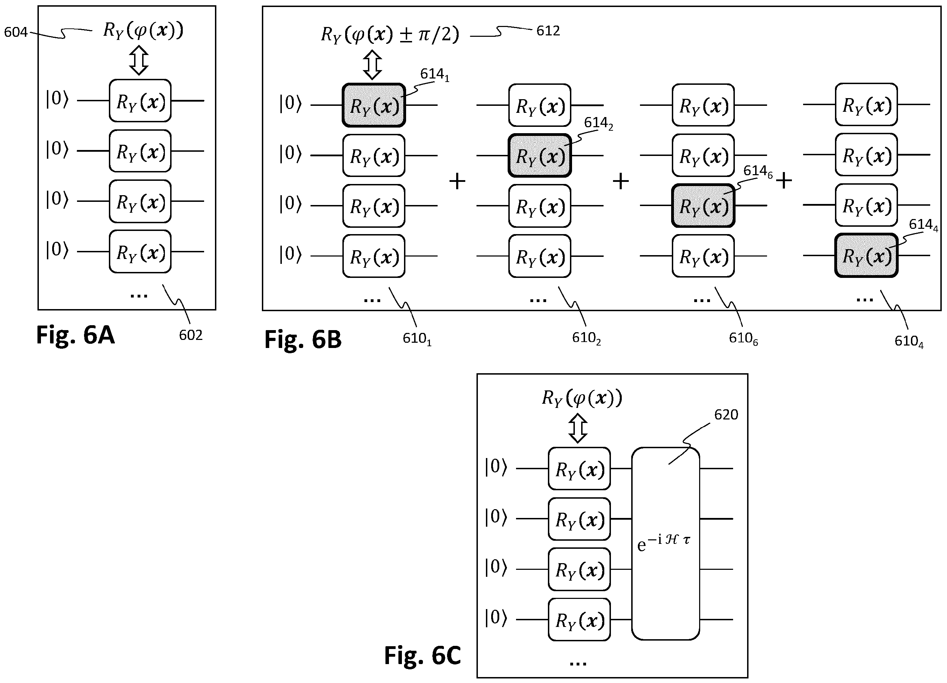

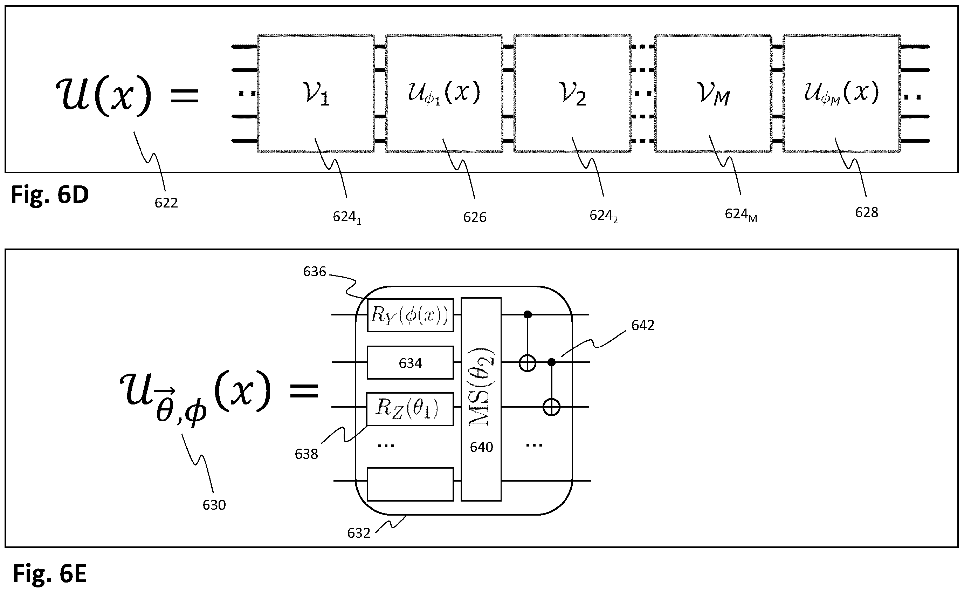

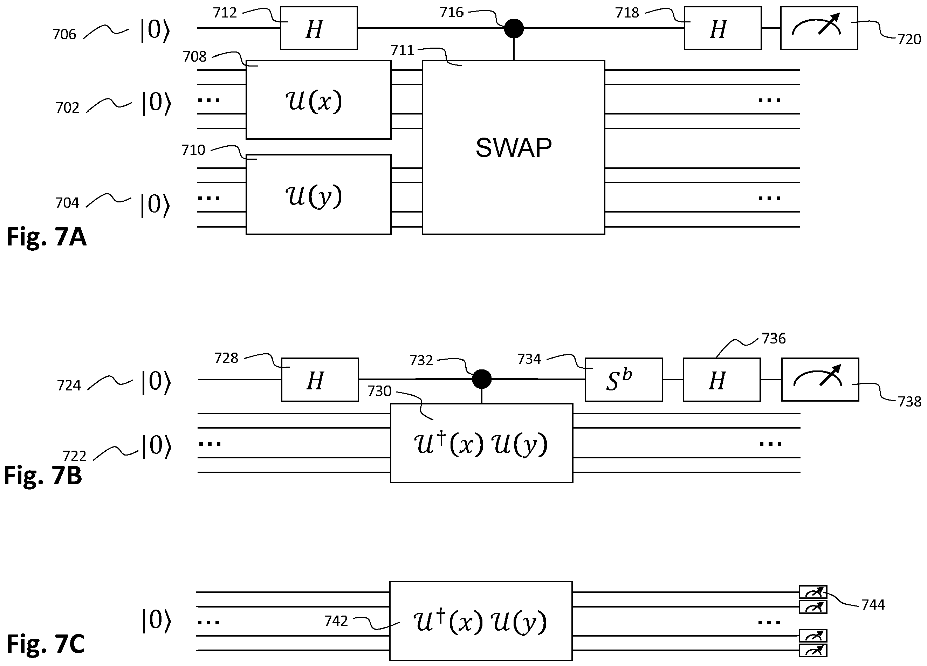

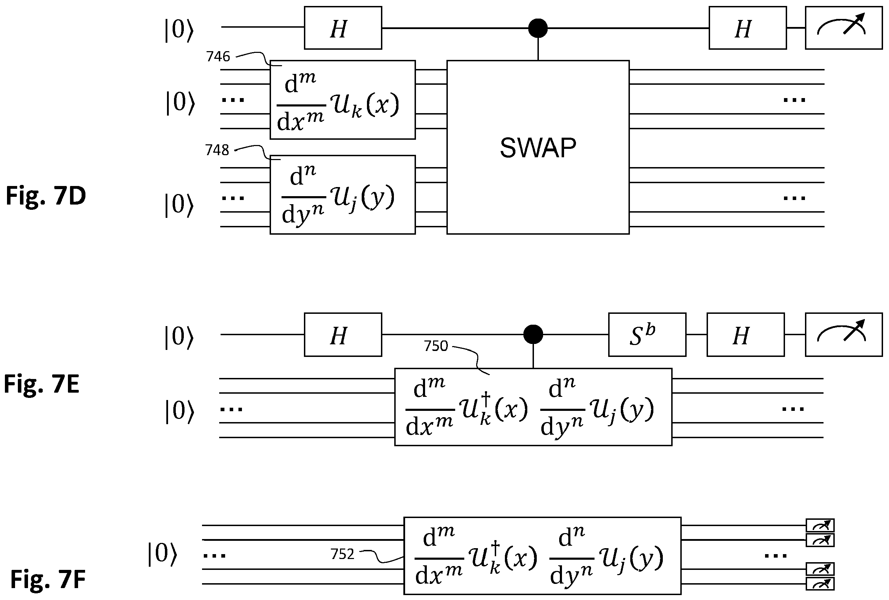

This has led to the development of quantum kernels. In its broadest sense, a quantum kernel is just a kernel (as defined above), which is evaluated using quantum computation. In a narrower sense, a quantum kernel may refer to a kernel that relies on quantum mechanical principles, typically an overlap of two wave functions $\langle \psi(x) | \psi(y) \rangle$, where $|\psi(x)\rangle$ denotes a quantum state encoded by the variable $x$ and $|\psi(y)\rangle$ denotes a quantum state encoded by the variable $y$. The requirement that the kernel be conjugate symmetric can be met by using the same encoding for both variables $x$ and $y$. Thus, two examples of quantum kernels are $\kappa(x,y) = \langle \psi(x) | \psi(y) \rangle$ and $\kappa(x,y) = |\langle \psi(x) | \psi(y) \rangle|^2$. The former is an inner product of wave functions and, therefore, a quantum kernel. These examples will be discussed in more detail below with reference to **Figs. 6** and **7**.

Similar to classical kernels, quantum kernels may be used to solve a variety of problems, in particular regression problems, such as data regression and the numerical solution of differential equations. This will be shown below in more detail using mixed model regression and support vector regression, but the skilled person can easily extend the method to other regression problems and other approaches to solve regression problems.

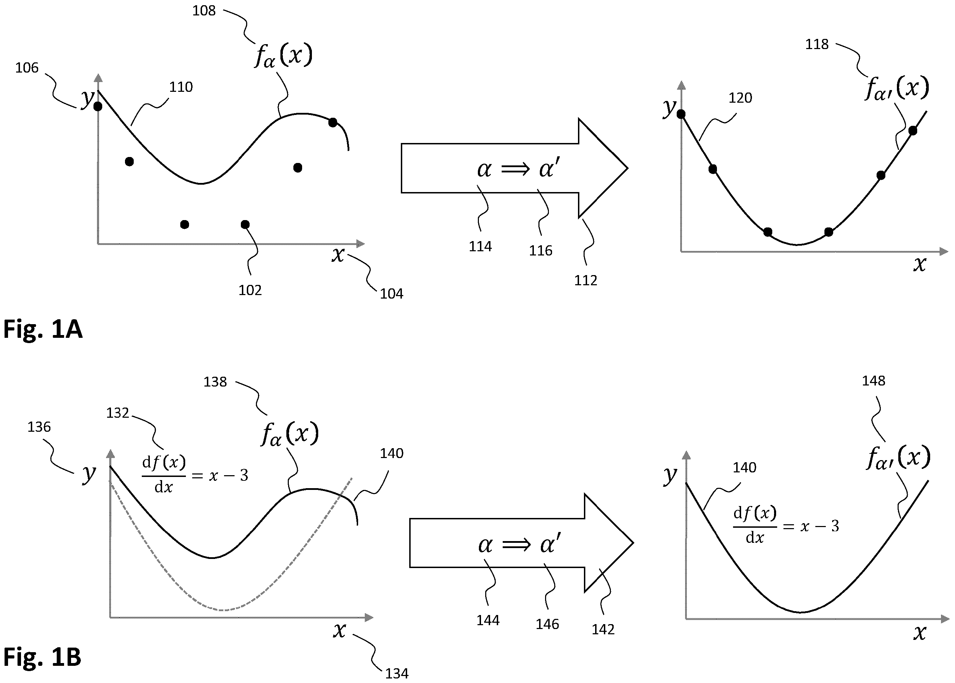

**Fig. 1A** and **1B** illustrate different types of regression problems that can be solved using embodiments in this application. **Fig. 1A** shows a typical data regression problem. In general, the goal of a data regression problem is to find a solution function that describes a data set (generally referred to as the training data set), optionally subject to a number of constraints. The solution function is typically limited to a finite domain in the data space, this domain may be referred to as the problem domain. The training data set may comprise training points in the problem domain and associated training values.

In the depicted example, the training data set comprises data points **102,** each defined through its coordinate value on the x-axis **104** and associated $y$-axis value **106**. The problem is to fit a trial function $f_\alpha(x)$ **108,** parametrised by one or more parameters $\alpha$, to the training data. In this disclosure, the trial function is typically of the shape

$$f_\alpha(x) = \alpha_0 + \sum_{i=1}^{N} \alpha_i \, \kappa(x, x_i),$$

where $\kappa(x,x_i)$ denotes a (quantum) kernel, and the set $\{\alpha_i\}_{i=0}^{N}$ denotes the optimisable parameters. The set $\{\alpha_i\}_{i=1}^{N}$ are also called the kernel coefficients. The set $\{x_i\}_{i=1}^{N}$ denotes a set of parameters at which the kernel is evaluated for each value of the function input x. In this disclosure, the set $\{x_i\}_{i=1}^{N}$ may also be referred to as the kernel points. In the case of a data regression problem, the kernel points may be selected from or based on the training data, or they can be chosen independently of the training data, e.g., (approximately) uniformly over the problem domain.

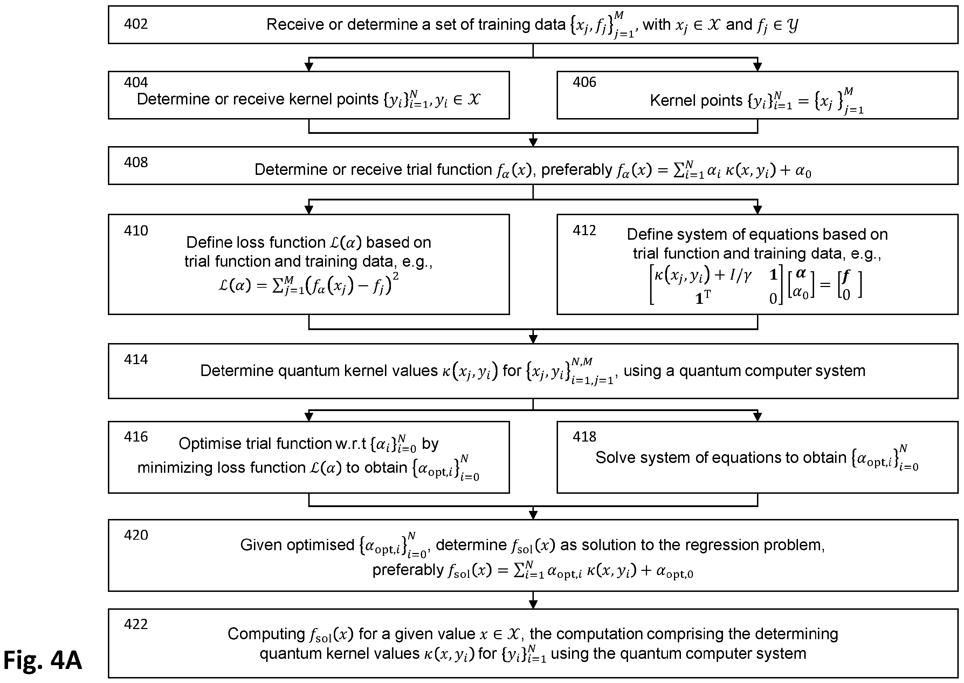

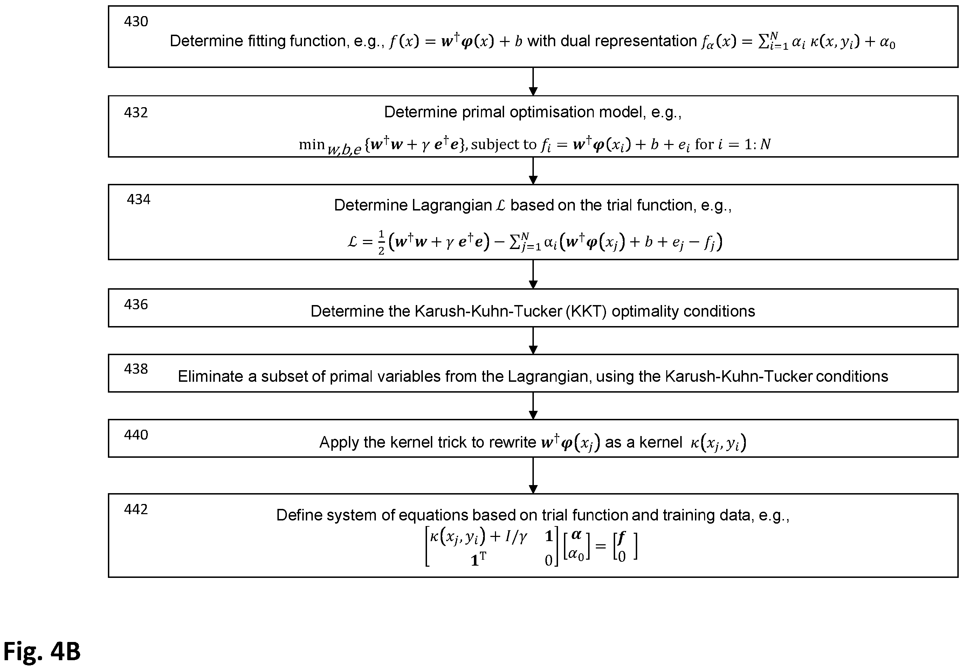

Initially, the trial function $f_\alpha(x)$ will have a function shape **110** that does not match the training data. The task of an optimiser **112** is to transform the shape of the function **108** by modifying its parameters $\alpha$ **114** to $\alpha'$ **116** until the function $f_{\alpha'}(x)$ **118** obtains an optimal fit to the data **120**. In this disclosure, the optimiser is a classical optimiser. The result is a solution function expressed in terms of a kernel and kernel coefficients. Depending on the regression problem, the solution function can be scalar or non-scalar (i.e., higher-dimensional, e.g., vectorial or tensorial). In general, the kernel coefficients have the same dimension as the solution function. Methods to solve a data regression problem are described below with reference to **Fig. 4A** and **4B.**

**Fig. 1B** shows a typical differential equation regression problem. In general, the goal of a differential equation regression problem is to find a solution function that obeys one or more differential equations, typically subject to a number of constraints such as boundary conditions. The solution function is typically limited to a finite domain in a variable space or in some function space, this domain may be referred to as the problem domain.

In the depicted example, the differential equation **132** is an ordinary linear differential equation, but the method is equally applicable to partial differential equations and non-linear differential equations. Similar to the data regression case, the problem is to find a optimise a parametrised trial function $f_\alpha(x)$ **138,** but in this case, the constraints are imposed by the differential equation and by the associated boundary conditions rather than by a data set.

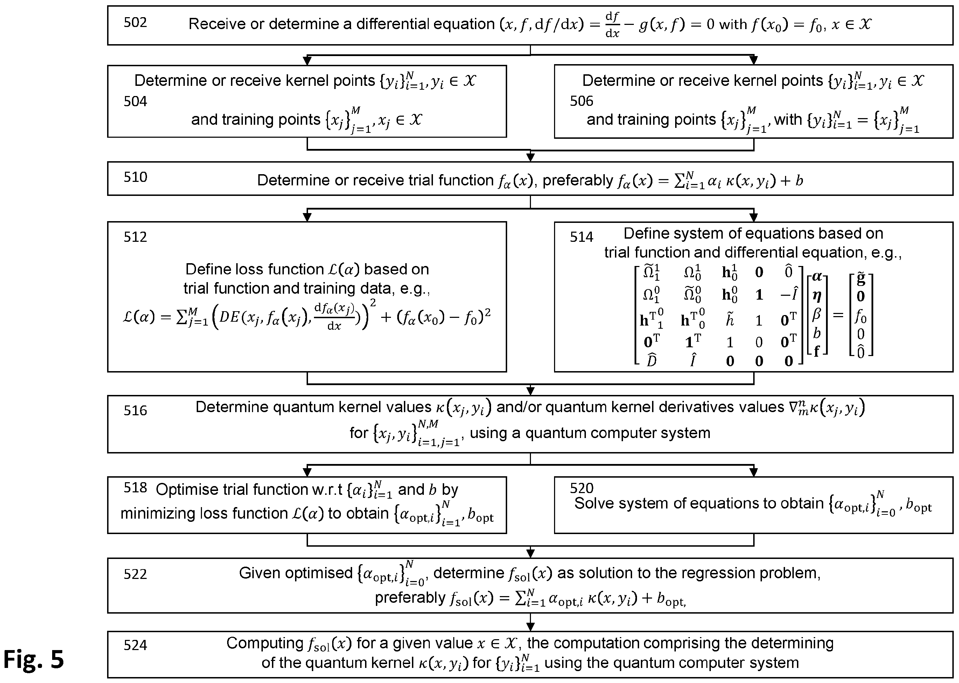

Initially, the trial function $f_\alpha$ will have function shape **140** that does not match the differential equation. The task of the classical optimiser **142** is to transform the shape of the function **138** by modifying its parameters $\alpha$ **144** to $\alpha'$ **146** until the function $f_{\alpha'}(x)$ **148** represents a valid solution **140** to the differential equation **132,** subject to the boundary conditions. The result is, again, a solution function expressed in terms of a kernel and kernel coefficients. Methods to solve a differential equation regression problem are described below with reference to **Fig. 5.**

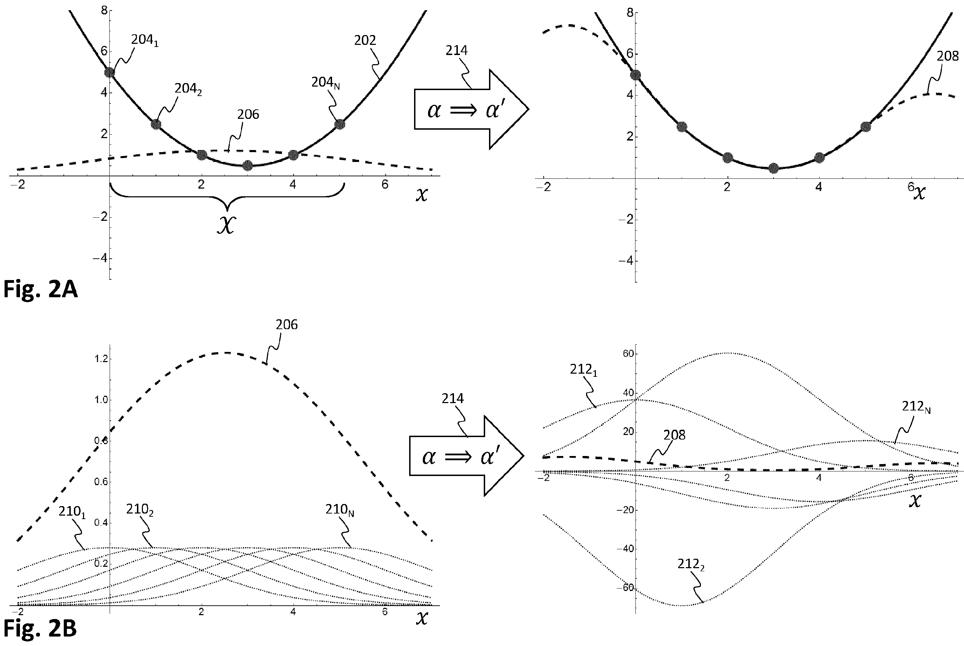

**Fig. 2A** and **2B** illustrate the use of kernel functions to solve a regression problems. In particular, **Fig. 2A** illustrates the effect of optimising kernel coefficients on a function fit. In this example, the problem is to find a function that approximates a target function **202** over a problem domain $X$, in this case $X = [0,5]$. A trial function **206** $f_\alpha(x) =$

$\sum_{i=1}^{N} \alpha_i \, \kappa(x, y_i)$ is selected with $N = 6$ kernel points **204**$_{1-N}$ selected uniformly over the problem domain $X$. In this example, $y_i = i - 1$. Depending on the problem, some kernel points may be selected outside the problem domain, as that may improve fitting results near the domain boundaries.

A radial basis function was selected for the kernel: $\kappa(x,y_i) = \frac{1}{\sqrt{\pi}\,\sigma} \exp\left(-\frac{1}{2}\left(\frac{x-y_i}{\sigma}\right)^2\right)$ with $\sigma = 2$. In an optimisation step **214,** a set of optimised kernel coefficients $\{\alpha_i'\}_{i=1}^{N}$ are obtained. A solution function **208** $f_{sol}(x) = f_\alpha(x)$ is obtained by applying the optimised kernel coefficients $\{\alpha_i'\}_{i=1}^{N}$ to the trial function $f_\alpha(x)$.

**Fig. 2B** illustrates the effect of kernel coefficients on the terms of the trial function. The kernel coefficients were initialised as $\alpha_i = 1$. The dotted lines **210**$_{1-N}$ represent the terms $\{\alpha_i \, \kappa(x, y_i)\}_{i=1}^{N}$ of the trial function **206** $f_\alpha(x)$. Before the optimisation step **214,** all terms are equal, and the resulting trial has a bulging shape. After the optimisation step, the optimised kernel coefficients $\alpha'$ are $\alpha' \approx \{36.54, -68.79, 60.52, -18.92, -15.46, 15.67\}$, resulting in optimised terms **212**$_{1-N}$ $\{\alpha_i' \, \kappa(x, y_i)\}_{i=1}^{N}$. It can be seen that even for a very simple problem with a smooth target function and smooth kernel functions, the contributions of the individual terms vary strongly.

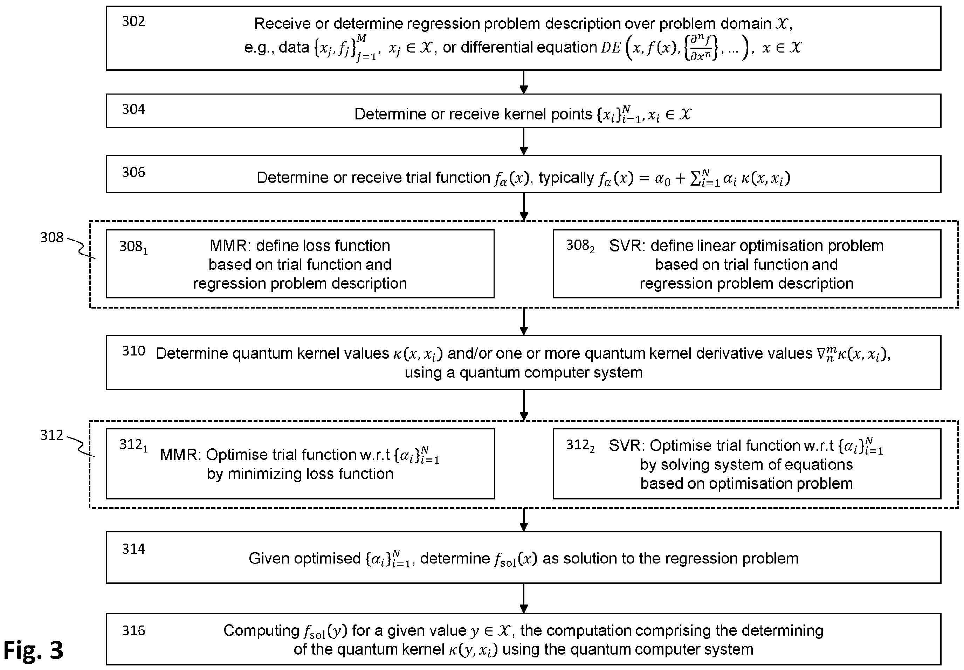

**Fig. 3** schematically depicts a flow diagram of a method for solving a regression problem using a quantum kernel according to an embodiment. The method may be performed using a hybrid computer system, which comprises a quantum computer system and a classical computer system. Since current-generation classical computers are typically much more efficient at general computational task than quantum computers, most steps are typically performed by the classical computer system, unless otherwise noted.

In a first step **302,** the method comprises receiving or determining a regression problem description defining a regression problem over a problem domain $X$. The regression problem can be, for example, a data regression problem or a differential equation problem. If the regression problem is a data regression problem, the regression problem description may comprise a data set $\{x_j, f_j\}_{j=1}^{M}$, $x_j \in X$ comprising data points $x_j$ and corresponding values $f_j$. This example will be discussed in more detail below with reference to **Figs. 4A** and **4B.** If the regression problem is a differential equation problem, the regression problem description may comprise a differential equation $DE\left(x, f(x), \left\{\frac{\partial^n f}{\partial x^n}\right\}, \dots\right)$, $x \in X$ for an unknown function $f(x): X \to y$, typically expressed in terms of the variable x, the function $f(x)$, and one or more derivatives of the function $f(x)$ with respect to x. This example will be discussed in more detail below with reference to **Fig. 5.**

In a step **304,** the method comprises receiving or determining a set of kernel points $\{x_i\}_{i=1}^{N}$, $x_i \in X$. In a step **306,** the method comprises receiving or determining a trial function associated with the regression problem. The trial function $f_\alpha(x)$ is based on a quantum kernel $\kappa(x,x_i)$ and parameterized by one or more kernel coefficients $\{\alpha_i\}_{i=1}^{N}$, $\alpha_i$

$\in \mathbb{C}$. Typically, the trial function is given by $f_a(x) = \alpha_0 + \sum_{i=1}^{N} \alpha_i \, \kappa(x, x_i)$. The set of kernel points define the points at which the trial function is evaluated. The kernel points are preferably chosen essentially uniformly over the problem domain. Depending on the application, the kernel points may be spaced regularly or irregularly. In some cases, the set of kernel points may be chosen equal to the set of data points, i.e., $\{x_i\}_{i=1}^{N} = \{x_j\}_{j=1}^{M}$.

In a step **308**, a solution approach may be selected, for example a mixed-model regression approach **308₁** (discussed in more detail below with reference to **Figs. 4A** and **5)** or a support-vector regression approach **308₂** (discussed in more detail below with reference to **Figs. 4A,B** and **5).** The mixed-model approach may comprise defining a loss function $L(\alpha)$ based on the trial function $f_\alpha(x)$ and the regression problem description. The support-vector regression approach may comprise defining a linear optimisation problem based on the trial function $f_\alpha(x)$ and the regression problem description.

A step **310** comprises determining, using the quantum computer system, the quantum kernel value $\kappa(x,x_i)$ and/or one or more quantum kernel derivative values $\nabla_n^m \kappa(x, x_i)$ for each of the kernel points. The quantum kernel values are based on measurements on the quantum system. This step is discussed in more detail below with reference to **Figs. 6-8.**

In a step **312,** the method comprises determining a set of optimal kernel coefficients based on the one or more kernel values and on the regression problem description. If the mixed-model regression approach is used **312₁**, this step may comprise evaluating the trial function $f_\alpha(x)$ and/or one or more derivatives $\dfrac{\partial^n f_a(x)}{\partial x^n}$ thereof, using the obtained kernel values and initial values for the kernel coefficients. The step may further comprise optimising the trial function with respect to the kernel coefficients $\{\alpha_i\}_{i=1}^{N}$ by minimising the loss function $L(\alpha)$. If the support-vector approach is used **312₂**, this step may comprise optimising the trial function with respect to the kernel coefficients $\{\alpha_i\}_{i=1}^{N}$ by solving a system of (linear) equations, based on the optimisation problem.

In a step **314,** the method may comprise determining a solution function $f_{\text{sol}}(x)$, based on the trial function $f_\alpha(x)$ and the set op optimised coefficients. In a step **316,** the method may comprise computing $f_{\text{sol}}(y)$ for a given evaluation point $y \in X$. The computation may comprise the evaluation of the quantum kernel $\kappa(y,x_i)$ for the evaluation point $y$, for each of the kernel points $\{x_i\}_{i=1}^{N}$, using the quantum computer system.

**Fig. 4A** schematically depicts a flow diagram of a method for solving a data regression problem using a quantum kernel according to an embodiment. Except for step **414,** all steps may be performed by a classical computer system. In a first step **402,** a set of training data $\{x_j, f_j\}_{j=1}^{M}$, with $x_j \in X$ and $f_j \in \mathcal{Y}$ are received or determined. The regression problem may then involve finding a function $f(x): X \to y$ that fits these points such that $f_j = f(x_j)$ for *all* $j$ = 1, ...,M, or at least approximates these points such that $f_j \approx f(x_j)$ for all $j$ = 1, ..., M. In this context, the space $X$ may be referred to as the data space or domain, and the space $\mathcal{Y}$ may be referred to as the target space or codomain. As was mentioned above, this problem may be solved using different approaches, e.g., mixed-model regression (using steps **404,410,416)** or support-vector regression (using steps **406,412,418).** Both approaches will be described in some detail below.

In the case of mixed-model regression, a step **408** may comprise receiving or determining a trial function $f_\alpha(x)$ of the form

$$f_\alpha(x) = \sum_{i=1}^{N} \alpha_i \, \kappa(x, y_i) + b \tag{1}$$

where $\mathbf{y} = \{y_i\}_{i=1}^{N}$ is a set of kernel points (received or determined in a step **404)** in the problem domain and $\boldsymbol{\alpha} = \{\alpha_i\}_{i=1}^{N}$ and $b$ are tuneable coefficients. The coefficients $\boldsymbol{\alpha} = \{\alpha_i\}_{i=1}^{N}$ may be referred to as kernel coefficients and the parameter $b$ may be referred to as the bias. (This may be considered a generalisation of linear regression, where

a fitting function $f$ is typically written as $f(x) = \alpha \cdot x + b$.) In some embodiments, the number of kernel points can be chosen (much) smaller than the number of data points, i.e., $N < M$. Typically, the kernel $\kappa(x,y)$ is chosen such that $\kappa$ approaches 1 if $x$ and $y$ are near each other, and approaches 0 if $x$ and $y$ are far away from each other; colloquially, a kernel function can typically be considered a measure for how similar its inputs are. For example, a widely used (classical) kernel function $\kappa(x,y)$ is the so-called radial basis function kernel, given by $\kappa(x,y) = \exp\left(-\dfrac{\|x-y\|^2}{2\sigma^2}\right)$, where $\|\cdot\|$ is a norm on the data space (e.g., an Euclidean distance), and $\sigma$ is a so-called hyperparameter defining a scale of what 'near' and 'far away' mean.

A step **410** comprise determining or receiving a loss function $L(\alpha)$. The loss function $\mathcal{L}(\alpha)$ may be defined based on the trial functions $f_\alpha(x)$,. The loss function is generally of the form

$$\mathcal{L}(\alpha) = \sum_{j=1}^{M} \left\| f_\alpha\left(x_j\right) - f_j \right\|, \tag{2}$$

where $\|\cdot\|$ is a norm on the target space $\mathcal{Y}$. A much used example is

$$\mathcal{L}(\alpha) = \sum_{j=1}^{M} \left( f_\alpha\left(x_j\right) - f_j \right)^2. \tag{3}$$

The loss function may be chosen such that when optimised (typically, minimised) with respect to $\alpha$, the corresponding $f_\alpha$ solves the regression problem. Preferably, the loss function is a square of a function that is linear in $\alpha$.

The loss function requires the evaluation of $\left\{ f_\alpha(x_j) \right\}_{j=1}^{M}$ which will require the evaluation of $N \times M$ kernels $\left\{ \kappa\left(x_j, y_i\right) \right\}_{i=1, j=1}^{N,M}$. Thus, a step **414** comprises determining quantum kernel values $\kappa(x_j, y_j)$ for $\left\{ x_j, y_i \right\}_{i=1, j=1}^{N,M}$ in $X \times X$, using a quantum computer. These evaluations are independent of $\alpha$ - the variable which is altered throughout optimisation. Consequently, the quantum kernel will only need to be evaluated once for each point in $\left\{ x_j, y_i \right\}_{i=1, j=1}^{N,M}$ at the start of the optimisation procedure. This minimises the use of the quantum computer, especially compared to a method in which the quantum computer is used in each optimisation step.

In a step **416,** the loss function $L(\alpha)$ is optimised (typically, minimised) with respect to the kernel coefficients $\alpha = \left\{ \alpha_i \right\}_{i=1}^{N}$ and the bias $b$, resulting in a set of optimal kernel coefficients $\left\{ \alpha_{\mathrm{opt},i} \right\}_{i=1}^{N}$ and an optimal bias $b_{\mathrm{opt}}$. Any suitable optimisation method may be used to optimise $L(\alpha)$. Preferably, a convex loss function is chosen, for example of the form $\mathcal{L}(\alpha) = \sum_{j=1}^{N} L\left(x_j; \alpha\right)^2$ with $L$ linear in $\alpha$ (such as the example discussed above in eq. (3), where $L\left(x_j; \alpha\right) = f_\alpha\left(x_j\right) - f_j = \sum_{i=1}^{N} \alpha_i \kappa\left(x_j, y_i\right) + b - f_j)$. A sufficient condition for convexity is $\partial^2 \mathcal{L} / \partial\alpha^2 \geq 0$ everywhere for all $\alpha_i \in \alpha$, which can be shown to be the case for this family of loss functions:

$$\frac{\partial^2 \mathcal{L}}{\partial\alpha_i^2} = \sum_{j=1}^{M} 2\left(\frac{\partial L}{\partial\alpha_i}\right)^2 + L\frac{\partial^2 L}{\partial\alpha_i^2} = \sum_{j=1}^{M} 2\left(\frac{\partial L}{\partial\alpha_i}\right)^2 \geq 0, \tag{4}$$

where the second equality is a consequence of the linearity of $L$ in $\alpha$. When a loss function is convex every local minimum is a global minimum and there are bounds on convergence for various optimisation methods.

A step **420** may comprise determining a solution to the regression problem. The solution may comprise a solution function

$$f_{\text{sol}}(x) = \sum_{i=1}^{N} \alpha_{\text{opt},i}\, \kappa(x, y_i) + b_{\text{opt}} \tag{5}$$

based on the trial function with the optimised kernel coefficients $\left\{\alpha_{\text{opt},i}\right\}_{i=1}^{N}$ and, optionally, optimised bias term $b_{\text{opt}}$. In a step **422,** the solution function $f_{\text{sol}}(x)$ may be evaluated for a new value of $x \in X$ (i.e., $x \neq x_i$ for $i$ = 1, ..., $N$). This requires determining (new) quantum kernel values $\kappa(x,y_i)$ for $\left\{y_i\right\}_{i=1}^{N}$ using the quantum computer.

Thus, in an exemplary embodiment, the method may comprise receiving or determining a set of training data $\left\{x_j, f_j\right\}_{j=1}^{M}$ , the training data comprising training points $x_j$ in the problem domain $X$ and training values $f_j$ associated with the training points. The method may further comprise receiving or determining one or more kernel points $\left\{y_i\right\}_{i=1}^{N}$ in the problem domain and a loss function $L(\alpha)$, the loss function being based on a quantum kernel $\kappa(x,y)$ and being parameterized by one or more kernel coefficients $\left\{\alpha_i\right\}_{i=1}^{N}$ and, optionally, a bias term $b$. The method may further comprise receiving or determining a loss function $\mathcal{L}(\alpha)$ based on the trial function and the training data. The method further comprises evaluating the quantum kernel for each pair $\left\{x_j, y_i\right\}_{i=1, j=1}^{N,M}$ of the training points and the kernel points. This step is discussed in more detail below with reference to **Fig. 7A-F.**

Based on the evaluated quantum kernel values, a value for the loss function is determined. Subsequently, the loss function $\mathcal{L}(\alpha)$ may be optimised (minimised) with respect to the one or more kernel coefficients $\left\{\alpha_i\right\}_{i=1}^{N}$ and the optional bias term $b$. In principle, any suitable optimiser may be used for this step, e.g., Nelder-Mead, Newton's method, BFGS, gradient descent methods like SGD, ADAM, etc. A solution function

$$f_{\text{sol}}(x) = \sum_{i=1}^{N} \alpha_{\text{opt},i}\, \kappa(x, y_i) + b_{\text{opt}} \tag{6}$$

with the optimised kernel coefficients $\left\{\alpha_{\text{opt},i}\right\}_{i=1}^{N}$ and, optionally, optimised bias term $b_{\text{opt}}$ may be considered the solution to the regression problem.

In the case of support-vector regression, the set of received or determined training data points and the set of kernel points are the same, i.e., $N = M$ and $\left\{x_j\right\}_{j=1}^{M} = \left\{y_i\right\}_{i=1}^{N}$ . Thus, step **406** may be considered part of step **402.**

**Fig. 4B** illustrates a method to determine a trial function of the form $f_\alpha(x) = \sum_{i=1}^{N} \alpha_i\, \kappa(x, y_i) + b$ , and a system of equations to optimise the trial function, based on the regression problem. For example, steps **430-442** may be used to perform steps **408** and **410.** These steps may be performed by the same computer system as steps **402-422,** or by a different computer system.

In a first step **430,** a fitting function $f(x)$ to find a solution for the training data $\left\{x_i, f_i\right\}_{i=1}^{N}$ may (initially) be written as

$$f(x) = w^\dagger \varphi(x) + b \tag{7}$$

where w and $b$ are tuneable parameters and where $\varphi(x)$ is a function $\varphi\colon X \to \mathcal{F}$ defining a mapping from the data space to an (unknown) feature space. As was explained above, these functions may be used to use the kernel trick upon.

In a step **432,** the regression problem may be written as a primal (original) linear optimisation model, based on the fitting function:

$$\min_{w,b,e} \{ w^\dagger w + \gamma\, e^\dagger e \}, \text{ subject to } f_i = w^\dagger \boldsymbol{\varphi}(x_i) + b + e_i \text{ for } i = 1 : N \qquad (8)$$

Here, e is a set of error variables which relax the constraints from $f_i = w^\dagger \varphi(x_i) + b + e_i$, and $\gamma$ is a tuneable hyperparameter to balance minimising the error with obtaining a flat function.

A step **434** comprises writing the model in Lagrangian form, which introduces a set of variables, known as the dual variables or Lagrange multipliers, that multiply each constraint:

$$\mathcal{L} = \frac{1}{2}\left( w^\dagger w + \gamma\, e^\dagger e \right) - \sum_{i=1}^{N} \alpha_i \left( w^\dagger \boldsymbol{\varphi}(x_i) + b + e_i - f_i \right) \qquad (9)$$

Using known methods, the Karush-Kuhn-Tucker (KKT) optimality conditions may then be found, in a step **436,** by equating the first derivative of the Lagrangian with respect to each of the primal and dual variables to zero. This results in *3N* + 1 equations which need to be satisfied for optimality:

$$\frac{\partial \mathcal{L}}{\partial w_i} = w_i - \sum_{j=1}^{N} \alpha_j\, \boldsymbol{\varphi}\left(x_j\right) = 0 \qquad (10)$$

$$\frac{\partial \mathcal{L}}{\partial \alpha_i} = -\left( w^\dagger \boldsymbol{\varphi}(x_i) + b + e_i - f_i \right) = 0 \qquad (11)$$

$$\frac{\partial \mathcal{L}}{\partial e_i} = \gamma\, e_i - \alpha_i = 0 \qquad (12)$$

$$\frac{\partial \mathcal{L}}{\partial b} = -\sum_{i=1}^{N} \alpha_i = 0 \qquad (13)$$

These conditions may be used to eliminate, in a step **438,** a subset of the primal variables; in this example, w is eliminated by inserting eq. (10) into eq. (11) and e is eliminated using eq. (12). Intuitively, this can be understood as turning the eliminated variable into a constraint. The combination of eqs. (10) into eq. (11) results in an equation in terms of the form $\varphi(x_j)^\dagger \varphi(x_i)$, i.e., an inner product in the feature space:

$$\sum_{j=1}^{N} \alpha_j\, \boldsymbol{\varphi}^\dagger\left(x_j\right) \boldsymbol{\varphi}(x_i) + b + e_i = f_i. \qquad (14)$$

By using the kernel trick, in a step **440,** these terms can be written as a kernel function $\kappa(x_j, x_i)$. In a step **442,** eqs. (14) and (13) can be rewritten to obtain a system of equations (written in matrix form):

$$\begin{bmatrix} \Omega + I/\gamma & \mathbf{1} \\ \mathbf{1}^\mathrm{T} & 0 \end{bmatrix} \begin{bmatrix} \alpha \\ b \end{bmatrix} = \begin{bmatrix} f \\ 0 \end{bmatrix} \qquad (15)$$

where $\Omega_{i,j} = \kappa(x_i, x_j)$, *I* is the $N \times N$ identity matrix, 1 is an N-dimensional vector containing only 1s, and $\boldsymbol{f} = \{f_i\}_{i=1}^{N}$

is the set of training values.

Thus, a set of (possibly non-linear) equations is obtained that can be solved for a set of variables representing a solution to the original stated problem. It should be noted that these equations are in terms of $\kappa$ not $\varphi$. These equations must be true for any valid kernel, thus the kernel can be chosen freely, in particular in the form of a quantum kernel. For this, it is not necessary to know what the corresponding functions $\varphi$ are; it suffices that such functions exist, as follows from Mercer's theorem. Therefore the formulation of these equations, and in particular the use of the kernel trick to introduce the (quantum) kernel, is valid.

Returning to **Fig. 4A,** in a step **412,** the problem may thus be written in a dual form as a system of equations to be solved with coefficients involving kernel evaluations. Similar to the mixed model regression method explained above with reference to **Fig. 4A,** these kernels would need to be evaluated only once in a step **414.** As will be explained below in more detail, the kernels may be evaluated as quantum kernels, using a quantum computer.

Once the kernel values have been determined for all $i,j$ = 1, ...,$N$, a step **418** comprises solving this system of equations using any suitable method. For example, the equations may be solved using solvers based on linear algebra, or by using a loss function. The system of equations of eq. (15) is of the general form $A\,x = b$, which can be solved by determining $x = A^{-1}\,b$ where $A^{-1}$ is an inverse of $A$ (or an equivalent method), or by determining and minimising a loss function $L(x)$ to minimise a distance between $A\,x$ and $b$. A typical example of such a loss function is $L(x) = \Sigma_i((A\,x)_i - b_i)^2$ (i.e., based on minimising the mean squared error), but other forms of loss function can similarly be used. The use of a loss function can be especially useful when considering problems resulting in non-linear systems of equations.

This results in a set of optimised dual parameters $\left\{\alpha_{\mathrm{opt},i}\right\}_{i=1}^{N}$ and $b_{\mathrm{opt}}$, which may be interpreted as kernel coefficients and bias, respectively.

Once solved, the relevant Karush-Kuhn-Tucker conditions can be substituted into the expression $f(x) = w^{\dagger}\varphi(x) + b$ and the kernel trick can, again, be applied to get an expression for $f_\alpha(x)$ in terms of the dual variables which have been solved for (i.e., $\left\{\alpha_{\mathrm{opt},i}\right\}_{i=1}^{N}$ and $b_{\mathrm{opt}}$) and kernel evaluations. This results, in step **420,** in the solution function

$$f_{\mathrm{sol}}(x) = \sum_{i=1}^{N} \alpha_{\mathrm{opt},i}\,\kappa(x, y_i) + b_{\mathrm{opt}} \qquad (16)$$

This way, there is no need to explicitly construct or evaluate the function $\varphi$, even though it was originally included as a fitting function in eq. (7). The resulting solution function $f_\alpha(x)$ is based only on evaluations of a chosen kernel.

Thus, the solution found using support-vector approach given in eq. (16) differs from the solution found using the mixed-model approach given in eq. (6) in that the set of freely selectable kernel points in the latter is replaced with the (fixed) set of training data points in the former. It should be noted that, depending on the problem, solving a set of linear equations may be computationally more or less efficient than optimising a loss function.

Thus, in this example, the method may comprise receiving or determining a set of training data $\left\{x_i, f_i\right\}_{i=1}^{N}$, the training data comprising training points $x_i$ in the problem domain $X$ and training values $f_i$ associated with the training points. The method may further comprise receiving or determining a linear optimisation problem based on the regression problem, the linear optimisation problem comprising a quantum kernel $\kappa(x,y)$, dual variables $\left\{\alpha_i\right\}_{i=1}^{N}$, and, optionally, a constraint $b$. The method may further comprise solving the linear optimisation problem using any suitable solver, the solving comprising evaluating the quantum kernel for each pair $\left\{x_i, x_j\right\}_{i=1,j=1}^{N,N}$ of training points. This step is discussed in more detail below with reference to **Fig. 7A-F.**

Based on the solution of the linear optimisation problem, a solution function $f_a(x) = \sum_{i=1}^{N} \alpha_i\,\kappa(x, x_i) + b$ may be determined using the dual variables $\left\{\alpha_i\right\}_{i=1}^{N}$ as kernel coefficients and the constraint $b$ as a bias term. This solution function may be considered the solution to the regression problem.

The step of determining a linear optimisation problem may comprise determining a Lagrangian $L$ based on the fitting function, the Lagrangian comprising the one or more dual variables $\left\{\alpha_i\right\}_{i=1}^{N}$ The step may further comprise using the Karush-Kuhn-Tucker (KKT) optimality conditions to recast the linear optimisation problem in terms of the quantum kernel $\kappa(x,x_i)$.

It should be noted that the steps of determining the set of equation in terms of the kernels and dual variables need be performed only once in order to solve a wide array of similar problems; in principle, the prepared system of equations may be used for any problem of the form assumed in preparing the system of equations.

Thus, the mixed-model regression and the support-vector regression methods essentially follow the same steps: choose setup, identify the model to solve based on approach and problem, calculate set of kernel evaluations, solve the model identified in step two. However, in general, identifying the model for the support-vector regression method is a more involved process than determining a loss function for the mixed-model regression method.

Both the mixed-model regression and the support-vector regression result in a solution function $f_{\text{sol}}(x)$ that is, typically, an approximation to the solution of the problem considered - for data regression these solution functions are represented by eq. (6) and eq. (16), respectively. These two functions are very similar with the difference being the quantum kernel being evaluated at kernel points $\{y_i\}_{i=1}^{N}$ for mixed-model regression versus $\{x_j\}_{j=1}^{M}$ for support-vector regression. This is a consequence of using the kernel trick when formulating the support-vector regression model which necessarily results in $\{y_i\}_{i=1}^{N} = \{x_j\}_{j=1}^{M}$ (and, hence, $M = N$).

Furthermore, it is worth noting that the form of eq. (15) for support-vector regression depends on the problem considered. For example, when solving differential equations, evaluations of the kernel derivative will be included in the function expression whilst for mixed-model regression, the loss function formulation may be the same no matter what problem considered.

An advantage of the mixed-model regression approach is the relatively simple optimisation problem that is solved. Another advantage is that the number of kernel evaluations may be limited, as the number of kernel points $N$ may be substantially smaller than the number of training points $M$. Yet another advantage is the convexity of the loss function in many cases, e.g. when considering data regression, linear differential equations, and certain other problems, resulting in a fast and easy convergence of many optimisers and a guaranteed global optimum.

On the other hand, an advantage of the support-vector regression approach is that, when the problem is linear, the resulting system of equations to solve is also linear, and thus has a deterministic solution. Furthermore, the initial trial function is in terms of $\varphi$ which has the dimensionality of the feature space $\mathcal{F}$, and is thus typically of (much) higher dimensionality than the kernel, yet never needs to be evaluated directly. Consequently, a more detailed solution may be obtained.

**Fig. 5** describes an embodiment where the regression problem is a differential equation problem. When the regression problem is a differential equation problem, the loss function (in step **512)** or the linear optimisation problem (in step **514)** comprises both the quantum kernel $\kappa(x,y_i)$ and one or more derivatives of the quantum kernel $\nabla_m^n \kappa(x,y_i)$. In this disclosure, the following notation is used to denote derivatives of a quantum kernel $\kappa(x,y)$:

$$\nabla_m^n \kappa(x,y) = \frac{\partial^{m+n} \kappa(x,y)}{\partial x^m \partial y^n}. \qquad (17)$$

In a first step **502,** a differential equation is determined or received. In the following example, the differential equation to be solved is of the form

$$DE(x, f(x), df(x)/dx) = \frac{df}{dx} - g(x,f) = 0 \qquad (18)$$

with initial condition $f(x_0) = f_0$. However, the method is equally applicable to other forms of normal and partial differential equations.

Analogously to the data regression problem discussed above, **Fig. 5** illustrates a method for solving the differential equation using a mixed-model regression approach (comprising steps **504,512,518),** and for solving the differential equation using a support-vector regression approach (comprising steps **506,514,520).**

When the mixed-model regression approach is used, in a step **510,** a trial function is determined or received which can again be written as:

$$f_\alpha(x) = \sum_{i=1}^{N} \alpha_i\, \kappa(x, y_i) + b. \tag{19}$$

Here, the kernel points $y_i \in X$ (determined or received in a step **506)** can be freely chosen. (In this context, $b$ is also sometimes referred to as $\alpha_0$). The choice of kernel points may depend on the problem that is modelled by the differential equation. For example, if a certain subregion of the problem domain is expected to comprise more relevant information or to exhibit less smooth behaviour, a relatively large number of kernel points can be selected in that region. In other cases, the kernel points may be chosen uniformly or pseudo-uniformly over the problem domain. In principle, a larger number of kernel points provides a larger number of degrees of freedom to fit the solution function, at an increased computational cost.

Similar to the data regression problem discussed above, a step **512** comprises determining or receiving a loss function $\mathcal{L}(\alpha)$ based on the trial function; any suitable loss function may be chosen. In many cases, an appropriate choice for the loss function $\mathcal{L}(\alpha)$ is:

$$\mathcal{L}(\alpha) = \sum_{j=1}^{M} \left( DE\left(x_j, f_\alpha(x_j), \frac{\mathrm{d}f_\alpha(x_j)}{\mathrm{d}x}\right)\right)^2 + (f_\alpha(x_0) - f_0)^2. \tag{20}$$

The set of training points $\{x_j\}_{j=1}^{M}$ (determined or received in step **506)** can be freely chosen over the problem domain. Typically, $M \geq N$, e.g., $\{x_j\}_{j=1}^{M} = \{y_i\}_{i=1}^{N}$. In order to evaluate this loss function, $\kappa(x_i, y_j)$ and $\nabla_1^0 \kappa(x_i, y_j)$ need to be evaluated over $\{x_j, y_i\}_{i=1, j=1}^{N,M}$ in order to compute $f_\alpha$ and $\mathrm{d}f_\alpha/\mathrm{d}x$, respectively. These quantum kernel values and quantum kernel derivative values are independent of $\alpha$ and, therefore, need to be determined only once (rather than for every optimisation step), in a step **516.**

A step **518** comprises optimising the loss function $\mathcal{L}(\alpha)$ using any suitable optimiser in order to obtain a set of optimised kernel coefficients $\alpha_{\mathrm{opt}} = \{\alpha_{\mathrm{opt},i}\}_{i=1}^{N}$ and $b_{\mathrm{opt}}$. The solution function may then be obtained, in a step **522,** by inserting these optimised kernel functions into the trial function of eq. (19).

If the differential equation is linear, then the loss function of eq. (20) is convex. That this is the case can been by considering that if the differential equation is linear, then $f_\alpha$ and consequently $\mathrm{d}/\mathrm{d}x\, f_\alpha$ must be linear in $\alpha$, which implies that the situation is the same as in eq. (4). When the differential equation is non-linear, this is not necessarily the case - if necessary, convexity may be checked numerically by sampling the relevant loss derivative at many locations. Alternatively, a non-convex optimiser may be used.

In a step **524,** the solution function $f_{\mathrm{sol}}(x)$ may be evaluated for a new value of $x \in X$ (i.e., $x \neq x_i$ for $i = 1, \ldots, N$). This requires determining (new) quantum kernel values $\kappa(x, y_i)$ for $\{y_i\}_{i=1}^{N}$ using the quantum computer.

The steps on the right-hand-side half of **Fig. 5** illustrate a method for solving the differential equation using a support-vector regression approach. Although the final formulation of the linear optimisation problem that must be solved depends on the form of the differential equation that is being solved, steps **510, 514** to obtain the linear optimisation problem remain the same as those discussed above with reference to **Fig. 4B:** formulate the optimisation model, determine the corresponding Lagrangian, determine the Karush-Kuhn-Tucker optimality conditions, eliminate a subset of primal variables by using the Karush-Kuhn-Tucker conditions, apply the kernel trick and finally write out remaining equations in matrix form in terms of a quantum kernel and dual variables.

In the current example, the differential equations $DE$ are $DE(x, f(x), \mathrm{d}f(x)/\mathrm{d}x) = \frac{\mathrm{d}f}{\mathrm{d}x} - g(x, f) = 0$ with initial condition $f(x_0) = f_0$ and $x \in X$. The optimisation equations may be derived in a manner analogous to eq. (15) discussed in the data regression example. In a first step (analogous to step **432),** the regression problem needs is written in primal support-vector regression model form

$$\min_{w,e,\xi,b} \{ w^\mathrm{T} w + \gamma_e\, \mathbf{e}^\mathrm{T} \mathbf{e} + \gamma_\xi\, \xi^T \xi \}, \tag{21}$$

$$\text{subject to} \begin{cases} \varphi'(x_i) - g(x_i, f_i) = e_i \text{ for } i = 1:N \\ w^\mathrm{T}\varphi(x_0) + b = f_0 \\ f_i = w^\mathrm{T}\varphi(x_i) + b + \xi_i \text{ for } i = 1:N \end{cases} \tag{22}$$

In this approach, the kernel points $\{y_i\}_{i=1}^N$ and the training points $\{x_j\}_{j=1}^M$, which are received or determined in a step **506,** must be the same set of points, i.e., $\{x_j\}_{j=1}^M = \{y_i\}_{i=1}^N$. In principle, this set can again be freely chosen through the problem domain, e.g. uniformly randomly sampled to ensure no structural bias, while still maintaining spread across the full problem domain.

The Lagrangian for this model may be determined by multiplying the minimization function by half and subtracting each of the restraints, where each restraint is multiplied by an introduced dual variable (analogous to step **434):**

$$\begin{aligned} \mathcal{L} = \frac{1}{2}\left( w^\mathrm{T} w + \gamma_e\, e^\mathrm{T} e + \gamma_\xi\, \xi^\mathrm{T} \xi \right) - \sum_{i=1}^N \alpha_i \left( w^\mathrm{T}\varphi'(x_i) - g(x_i, f_i) - e_i \right) \\ - \beta \left( w^\mathrm{T}\phi(x_0) + b - f_0 \right) - \sum_{i=1}^N \eta_i \left( w^\mathrm{T}\varphi(x_i) + b + \xi_i - f_i \right) \end{aligned} \tag{23}$$

Subsequently, the Karush-Kuhn-Tucker conditions may be found by calculating the derivative of the Lagrangian with respect to each of its variables, both primal and dual, (i.e., $w$, $\alpha$, $e$, $b$, $\beta$, $f$, $\eta$, $\xi$), and equating these derivatives to zero (analogous to step **436**). This results in a set of 6N + 2 equations, similar to eqs. (10)-(13) derived above for **Fig. 4B.** Using these equations, a subset of the primal variables ($w$, $e$, $\xi$) can be eliminated, leaving 3N + 2 equations (analogous to step **438**). For these equations, the kernel trick can be used to introduce the kernel $\kappa(x_i, x_i)$ and its derivatives to replace the product $w^\mathrm{T}\varphi$ and its derivatives (analogous to step **440**). Written in matrix form, this leads to the following set of equations (analogous to step **442):**

$$\begin{bmatrix} \widetilde{\Omega}_1^1 & \Omega_0^1 & \mathbf{h}_0^1 & \mathbf{0} & \hat{0} \\ \Omega_1^0 & \widetilde{\widetilde{\Omega}}_0^0 & \mathbf{h}_0^0 & \mathbf{1} & -\hat{I} \\ \mathbf{h}^{\mathrm{T}0}_1 & \mathbf{h}^{\mathrm{T}0}_0 & \tilde{h} & 1 & \mathbf{0}^\mathrm{T} \\ \mathbf{0}^\mathrm{T} & \mathbf{1}^\mathrm{T} & 1 & 0 & \mathbf{0}^\mathrm{T} \\ \widehat{D} & \hat{I} & \mathbf{0} & \mathbf{0} & \mathbf{0} \end{bmatrix} \begin{bmatrix} \alpha \\ \eta \\ \beta \\ b \\ f \end{bmatrix} = \begin{bmatrix} \tilde{\mathbf{g}} \\ \mathbf{0} \\ f_0 \\ 0 \\ \hat{0} \end{bmatrix} \tag{24}$$

where $f = \{f_i\}_{i=1}^N$ is a set of dummy variables and $\eta = \{\eta_i\}_{i=1}^N$ and $\beta$ are dual variables introduced along with $\alpha = \{\alpha_i\}_{i=1}^N$ corresponding to the dummy variable constraint and the primal variable constraint, respectively. The remaining notation is as follows

$$[\Omega_n^m]_{i,j} = \nabla_n^m \kappa\left(x_j, y_i\right)$$

$$\widetilde{\Omega}_n^m = \Omega_n^m + I/\gamma_e$$

$$\widetilde{\widetilde{\Omega}}_n^m = \Omega_n^m + I/\gamma_\xi$$

$$[\mathbf{h}_n^m]_i = \nabla_n^m \kappa(x_0, y_i)$$

$$\tilde{h} = \kappa(x_0, x_0)$$

$$\widehat{D} = \mathrm{diag}\left(\left\{\frac{\partial g}{\partial f}(x_i, f_i)\right\}_i\right)$$

$$[\tilde{\mathbf{g}}]_i = g(x_i, f_i).$$

This results in a set of non-linear equations which can be solved to obtain a set of optimised variable values $\alpha_{\mathrm{opt}} = \{\alpha_{\mathrm{opt},i}\}_{i=1}^N$ and $b_{\mathrm{opt}}$. As was mentioned above, different methods may be used to solve the system of equations, based on e.g. linear algebra or based on a loss function. By also substituting in the relevant Karush-Kuhn-Tucker optimality conditions into $f(x) = \sum_{i=1}^N \alpha_i \kappa(x, y_i) + b$ and employing the kernel trick again, an expression for f in terms of kernels and the just found variable values is obtained:

$$f(x) = \sum_{i=1}^N \alpha_i \, \nabla_1^0 \kappa(x_i, x) + \sum_{i=1}^N \eta_i \, \kappa(x_i, x) + \beta \, \kappa(x_0, x) + b \qquad (25)$$

For completeness' sake, it is mentioned that the remarks above relating to the ability to freely choose a kernel to replace $\varphi^\mathsf{T}\varphi$ extends to replacing derivatives of $\varphi^\mathsf{T}\varphi$ by corresponding kernel derivatives.

If the differential equation is linear, the dummy variable restraints with respect to $f_i$ would not be required, leading to a system of linear equations with lower dimension. However, many practical problems give rise to differential equations that are not of the form defined in eq. (18). For example, they may be higher order, higher dimension, or otherwise different. In such cases, the same steps may be followed, but a different set of equations to solve would result.

In principle, the methods described above with reference to **Fig. 4** and **Fig. 5** can make use of either a classical kernel or a quantum kernel. However, using quantum kernels is advantageous as they can efficiently model a very high dimensional space, which would be unfeasible, or at least less practical, using classical computation methods.

Generally speaking, quantum kernels may be encoded using feature maps that encode dependence on a variable into a state. Both the quantum kernel itself and its derivative may subsequently be evaluated, as shown below. Typically, quantum kernel are of the form $\kappa(x,y) = \langle \psi(x) | \psi(y) \rangle$ or $\kappa(x, y) = |\langle \psi(x) | \psi(y) \rangle|^2$, but other forms are also possible. The quadratic form, $\kappa(x,y) = |\langle \psi(x) | \psi(y) \rangle|^2$, is shown to be a valid kernel in M. Schuld, "Quantum machine learning models are kernel methods", *arXiv e-prints* (2021) arXiv-2101, which is hereby incorporated by reference. An advantage of this kernel is that it is real-valued, making it particularly suitable for expressing real valued functions.

As was just mentioned, quantum kernels typically contain a state $|\psi(x)\rangle$, where $\psi(x)$ represents a wave function encoded by a classical variable x. The wave function may be encoded using feature-map encoding, where x is embedded into the state by parametrising gates preparing the state, i.e. $|\psi(x)\rangle = U(x) |0\rangle$ for some unitary operator $U(x)$. Thus, the properties of the quantum kernel may be determined by the selection of unitary operator(s). An example is the product feature map $U_\phi(x) = \otimes_{j=1}^N R_{\alpha,j}(\phi(x))$, where $R_{\alpha,j}(\phi(x))$ is a rotation on qubit $j$ of magnitude $\phi(x)$ about a Pauli operator $\alpha$. Other more complicated feature map encodings can be considered. Furthermore, multiple feature maps can be layered between static circuits, e.g., $U(x) = V_1 \, U_{\phi_1}(x) V_2 \ldots U_{\phi_M}(x) \, V_M$. Similar to many variational algorithms, preferably a feature map is chosen that is expressible enough to represent the solution to the problem whilst also resulting in a trainable trial function (i.e., a trial function with parameters that can be optimised with sufficient ease).

**Fig. 6A-6E** depict quantum circuits according various embodiments. In particular, **Fig. 6A** shows a basic form of a quantum feature map, which is here illustrated as an example of a 'product' type feature map. In this example, single qubit rotations **604** (here chosen as $R_Y(\phi(x))$) act on each qubit individually and are parametrized by a function $\phi$ of variable x. The function $\phi$ is preferably a non-linear function. For a non-linear feature map encoding, the non-linear function $\phi(x)$ may be used as an angle of rotation. The application **602** of one rotation operation to each qubit in a register may be referred to as a single layer of rotation operations. A product feature map can be further generalized to several product layers, and different functions $\{\phi\}$; for example, several feature maps may be concatenated to represent a multivariable function. For a quantum kernel, a single layer (as in **Fig. 7A)** or a double layer (as in **Fig. 7B** and **7C)** is generally sufficient.

**Fig. 6B** illustrates an example of a derivative quantum circuit for the product feature map of **Fig. 6A.** Differentiation over variable $x$ follows the chain rule of differentiation, including qubit operations **612** with shifted phases $R_Y(\phi(x) \pm \pi/2)$. Here, the expectation value of the derivative is written as a sum of separate expectations with shifted phases, repeated for each x-dependent rotation **610$_{1\text{-}4}$**.

**Fig. 6C** depicts an example of a generalized product feature map, where the layer of rotations is followed by the unitary evolution generated by Hamiltonian $\mathcal{H}$ **620.** For complicated multiqubit Hamiltonians, the encoded state may comprise exponentially many unique x-dependent amplitudes. The time interval $\tau$ can be set variationally, or annealed from zero to a finite value during the optimization procedure.

Preferably, the product feature map has a non-linear dependence on the encoded variable x. In the simplest case, this may correspond to a single layer of rotations as shown in **Fig. 6A.** Such product feature map may be described by the following expression:

$$\mathcal{U}_\phi(x) = \bigotimes_{j=1}^{N'} R_{a,j}(\varphi(x)), \qquad (26)$$

where $N' \leq N$ is a number of qubits that is used by the quantum computer for the encoding and the symbol $\otimes_j$ denotes the tensor product. Further, $R_{a,j}(\phi) = \exp\left(-\mathrm{i}\frac{\phi}{2}P_{a,j}\right)$ is a Pauli rotation operator for Pauli matrices $\hat{P}_{a,j} = \hat{X}_j, \hat{Y}_j$ or $\hat{Z}_j$, ($a = X, Y, Z$, respectively) acting at qubit $j$ for phase $\phi$. This type of feature map circuit is also described in copending application PCT/EP2021/081737, which is hereby incorporated by reference.

The next step is to assign a non-linear function for rotation. In an embodiment, the non-linear function may be selected as $\phi(x) = \arcsin(x)$ and $\alpha = Y$, such that only real amplitudes are generated. The unitary operator of eq. (26) may then be rewritten as (for $N' = N$):

$$\mathcal{U}_\phi(x) = \bigotimes_{j=1}^{N} \exp\left(-\mathrm{i}\frac{\arcsin(x)}{2}\hat{Y}_j\right), \qquad (27)$$

leading to amplitudes that depend on the encoded variables as $\sin(\arcsin(x)/2)$ and $\cos(\arcsin(x)/2)$. Acting on the initial state 10), this feature map may encode the variable as an N-th degree polynomial formed by $\{1, x, \sqrt{1-x^2}\}$ and products thereof. The redundancy from many qubits thus forms a basis set for function fitting.

The product feature map can be generalized to several layers of rotations $\ell = 1, 2, ..., L$, various non-linear functions $\varphi_\ell$, and specific subsets of qubits $\mathbb{N}_\ell$ in each layer, and may then be written as:

$$\mathcal{U}_\phi(x) = \prod_{\ell=1}^{L} \bigotimes_{j\in\mathbb{N}_\ell} R^{(\ell)}{}_{a,j}(\phi_\ell(x)). \qquad (28)$$

Below, an example of how the quantum feature map can be differentiated is provided, e.g., the example in eq. (26) wherein $\alpha = Y$ rotations and full layer are considered.

The derivative for the unitary operator generated by any involutory matrix (length-1 Pauli string in this case) can be written as:

$$\frac{d}{dx} \mathcal{U}_\phi(x) = \frac{1}{2}\left(\frac{d}{dx}\phi(x)\right)\sum_{j'=1}^{N}\bigotimes_{j=1}^{N'}(-\mathrm{i}\,\hat{Y}_{j'}\delta_{j,j'})R_{Y,j}(\phi(x))$$

$$= \frac{1}{2}\left(\frac{d}{dx}\phi(x)\right)\sum_{j'=1}^{N}\bigotimes_{j=1}^{N'} R_{Y,j}\big(\phi(x) + \pi\,\delta_{j,j'}\big),$$

(29)

where Euler's formula can be used to rewrite the derivative into the form of a sum of unitary operators, where x-dependent rotations are shifted one-by-one. Next, the formula may be generalized to the expectation value of any observable $\langle\hat{C}\rangle$ for the encoded state, following the step of standard parameter shift rule. This reads:

$$\frac{d}{dx}\left\langle 0\left|\mathcal{U}_\phi^\dagger(x)\,\hat{C}\,\mathcal{U}_\phi(x)\right|0\right\rangle = \frac{1}{4}\left(\frac{d}{dx}\phi(x)\right)\left(\langle\hat{C}\rangle^+ - \langle\hat{C}\rangle^-\right)$$

(30)

where $\langle\hat{C}\rangle^+$ and $\langle\hat{C}\rangle^-$ are the sum of shifted unitary operators:

$$\langle\hat{C}\rangle^\pm = \sum_{j'=1}^{N}\bigotimes_{j=1}^{N'} R_{Y,j}\left(\phi(x)\pm\frac{\pi}{2}\,\delta_{j,j'}\right)\hat{C}\,R_{Y,j}\left(\phi(x)\pm\frac{\pi}{2}\,\delta_{j,j'}\right)$$

(31)

The corresponding derivative quantum circuits (DQC) are shown in **Fig. 6B,** where differentiation of the cost function for feature map is performed using the chain rule (highlighted rotations **614$_{1-4}$**). A similar strategy can be applied for generic multilayer feature maps and a different choice of non-linear map $\phi(x)$.

Finally, in the cases where the generator of the feature map (encoding Hamiltonian $\mathcal{H}$ **620**) is not an involutory matrix, they may be rewritten as a sum of unitary operators, and measure the derivative as a sum of overlap using the SWAP test.

In another embodiment, a non-linear quantum feature map may be used which may be referred to as the Chebyshev feature map. Belonging to the product feature map family, this feature map drastically changes the basis set for function representation. As a building block, a single qubit rotation $R_{Y,j}(\phi(x))$ may be used, but with non-linearity introduced as $\phi(x) = 2\,n\,\arccos(x)$, $n = 0,1,2,..$, such that the encoding circuit reads:

$$\mathcal{U}_\phi(x) = \bigotimes_{j=1}^{N} R_{Y,j}(2\,n[j]\,\arccos(x)).$$

(32)

Here it is considered that the coefficient $n[j]$ may in general depend on the qubit position. The seemingly small change of factor two multiplication goes a surprisingly long way. Namely, let us expand the rotation using Euler's formula, getting:

$$R_{Y,j}\big(\phi(x)\big) = \exp\left(-\mathrm{i}\,\frac{2\,n\arccos(x)}{2}\,\hat{Y}_j\right) = \cos(n\arccos(x))\,\mathbb{1}_j - i\sin(n\arccos(x))\,\hat{Y}_j$$

$$= T_n(x)\,\mathbb{1}_j + U_n(x)\,\hat{X}_j\,\hat{Z}_j.$$

(33)

The resulting decomposition of eq. (33) corresponds to the unitary operation with matrix elements defined through degree-n Chebyshev polynomials of first and second kind, denoted as $T_n(x)$ and $U_n(x)$. Formally, Chebyshev polynomials represent a solution of Chebyshev differential equation:

$$(1 - x^2)\frac{d^2y}{dx^2} - x\frac{dy}{dx} + n^2 y = 0, n = 0, 1, 2, 6, \dots \qquad (34)$$

wherein

$$y(x) = A\cos(n\arccos(x)) + B\sin(n\arccos(x)) \equiv A\,T_n(x) + B\,U_n(x), |x| < 1, \qquad (35)$$

and wherein $A$, $B$ are some constants. Chebyshev polynomial of the first kind for low degrees can be written explicitly as $T_0(x) = 1$, $T_1(x) = x$, $T_2(x) = 2x^2 - 1$, $T_6(x) = 4x^6 - 6x$, and higher degrees can be deduced using the recursion relation

$$T_{n+1}(x) = 2\,x\,T_n(x) - T_{n-1}(x). \qquad (36)$$

Similarly, second-kind Chebyshev polynomials can be written as $U_0(x) = 1$, $U_1(x) = 2x$, and $U_{n+1}(x) = 2\,x\,U_n(x) - U_{n-1}(x)$. The crucial properties of Chebyshev polynomials are their chaining properties, nesting properties, and simple differentiation rules. The chaining properties for polynomials of the first and second kind read as $2\,T_m(x)\,T_n(x) = T_{m+n}(x)$ + $T_{|m-n|}(x)$ and $U_m(x)U_n(x) = \sum_{k=0}^{n} U_{m-n+2k}(x)$ , respectively. Derivatives can be obtained as $dT_n(x)/dx = n\,U_{n-1}(x)$. Nesting corresponds to the relation $T_n(T_m(x)) = T_{nm}(x)$. Finally, polynomials of different kinds can be converted as $U_n(x) = 2\sum_j^n T_j(x)$ when $j$ is even, and $U_n(x) = 2\sum_j^n [T_j(x) - 1]$ when $j$ is odd. Finally, it is noted that Chebyshev polynomials may represent oscillating functions when defined in the $x = (-1,1)$ region, and their derivatives diverge at the boundaries of this interval.

The power of the representation described can be inferred from approximation theory. This theory states that any smooth function can be approximated as $f(x) = \sum_{n=0}^{\infty} A_n T_n(x)$ , $|x| \leq 1$. Chebyshev polynomials form an optimal set of basis functions in the sense of the uniform $L_\infty$ norm. This is why they are at the foundation of spectral algorithms for solving ODEs, and also give an edge in quantum simulation.

As examples of encodings for quantum kernels, two types of Chebyshev quantum feature maps are presented. The first version corresponds to a sparse Chebyshev feature map defined as:

$$\mathcal{U}_\phi(x) = \bigotimes_{j=1}^{N} R_{Y,j}(2\arccos(x)). \qquad (37)$$

where the encoded degree is homogeneous and is equal to one. Here the chaining properties $T_n(x)$ and $U_n(x)$ should be remembered, noting that once states with Chebyshev polynomials as pre-factors are created, the basis set will grow further by concatenating elements. In the following, the sparse distinction is dropped and eq. (37) will be simply referred to as the Chebyshev feature map.

The second version corresponds to a Chebyshev tower feature map, which may be defined as:

$$\mathcal{U}_\phi(x) = \bigotimes_{j=1}^{N} R_{Y,j}(2\,j\arccos(x)), \qquad (38)$$

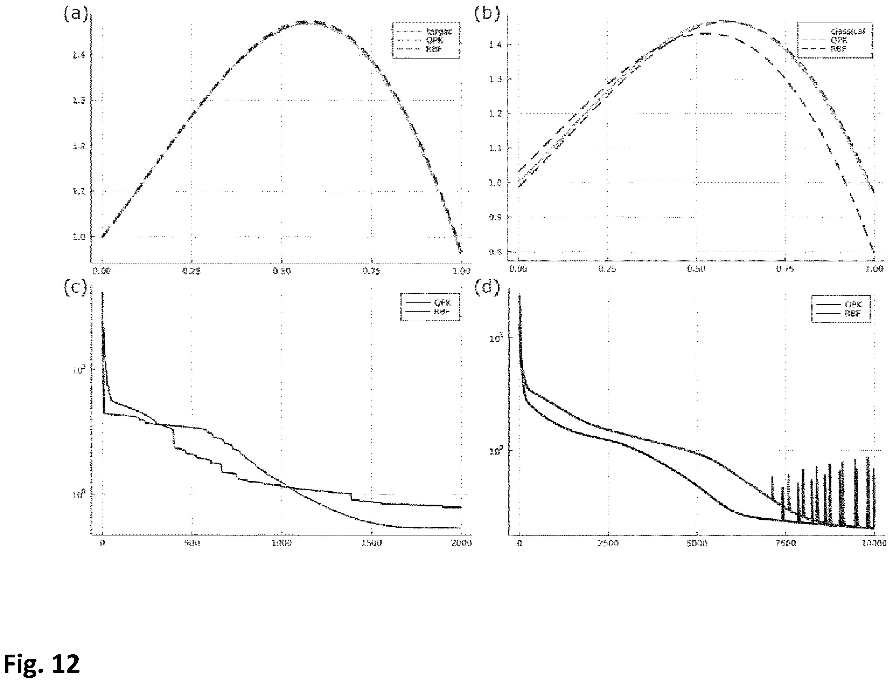

where the encoded degree grows with the number of qubits, creating a tower-like structure of polynomials with increasing $n = j$. Again, as polynomials chain together and morph between two kinds and their degrees, the basis set is largely enriched. This is the choice that is exploited when large expressibility is needed without increasing system size and number of rotations. Eq. (38) allows the representation of generic functions, and can be improved further by using layers of rotations as in eq. (28). The results discussed below with reference to **Fig. 12-14** have been obtained using a (simulated) Chebyshev tower feature map to encode the variable in the quantum kernel.

Product feature maps may induce non-linear mappings between variable(s) $x$ and quantum states described by tensor products of separate single-qubit wavefunctions. These states are limited to the subspace of product states.

To utilize the power of the entire Hilbert space of the system, approaching the amplitude encoding case, independently distinct amplitudes need to be populated, including the subspace of entangled states. To make the described feature maps even more expressive, it is suggested to enhance the product feature maps (and specifically the layered Chebyshev map) with additional entangling layers represented by Hamiltonian evolution. Namely, after the set of single qubit rotations another unitary operator **620** exp(-i $\mathcal{H}$ τ) may be considered which acts for time τ and is generated by the Hamiltonian $\mathcal{H}$ . The sketch of the circuit is shown in **Fig. 6C.** By choosing H as a complex many-body Hamiltonian, it is ensured that exponentially many amplitudes are generated. It is known that the quantum simulation of dynamics leads to a volume-like increase of entanglement.

**Fig. 6D** depicts a quantum kernel feature map with a layered structure. In the depicted example, the quantum kernel feature map **622** is defined by a unitary operator $\mathcal{U}_l(x)$ which comprises a (preferably alternating) sequence of static circuits $v_{1\text{-}M}$ **624**$_{1\text{-}M}$ and circuits $\mathcal{U}_{\phi_j}(x)$ **626,628** parameterized by x via a (non-linear) function $\phi_j$. This effectively means x-data is 're-uploaded' at multiple layers, increasing expressivity of the feature map $\mathcal{U}(x)$. Layers **626,628** can be either static (comprising gates that are not changed) or variational (comprising gates which have parameters, such as rotation gates, which can be tuned). This concept of variational quantum kernels is further detailed in **Fig. 6E,** where the quantum kernel feature map $U(x)$ is parameterized by the type of non-linear function $\phi$ but also by a set of variational parameters, $\vec{\theta}$.

The suitability of a quantum feature map may depend on the regression problem being solved. However, it is not always a priori evident which quantum feature maps would be suitable choices for a given regression problem. Therefore, it makes sense to be able to 'tune' or modify the quantum kernel feature map structure, and potentially even make the quantum kernel feature map 'trainable' in the sense that its parameters be treated on the same footing as other parameters in quantum machine learning such as kernel training, e.g. as presented in co-pending applications EP21190216.8, EP22155513.9 and PCT/EP2021/081737, which are hereby incorporated by reference.

An example of such parametric feature map is depicted in **Fig. 6E,** where a trainable quantum kernel feature map $\mathcal{U}_{\vec{\theta},\phi}(x)$ **630** is expressed as a single unitary operator **632** comprising several subcomponents, such as single-qubit rotations $R_j$ parameterized by a function $\phi$ of x **636,** or parameterized by a FM parameter $\theta$ **638,** or a static gate **634** or **642.** Furthermore, multi-qubit gate operations or analog blocks, such as a block **640,** can be used which may be dependent on either x or θ.

**Fig. 7A-F** depict circuit diagrams for evaluating a quantum kernel, respectively a derivative thereof, according to various embodiments. Other embodiments may use different circuits to measure the overlap of two wave functions. In particular, **Fig. 7A** shows a circuit diagram for implementation of a quantum kernel of the form

$$\kappa(x,y) = |\langle\psi(x)|\psi(y)\rangle|^2 = \langle 0|\mathcal{U}^\dagger(x)\,\mathcal{U}(y)|0\rangle\langle 0|\mathcal{U}(x)\,\mathcal{U}^\dagger(y)|0\rangle. \qquad (39)$$

In this example, a so-called SWAP-test (as defined in H. Buhrman et al. "Quantum fingerprinting", Physical Review Letters 87:16 (2001), page 167902, which is hereby incorporated by reference) is used to measure the expectation value $|\langle\psi(x)|\psi(y)\rangle|^2$ of an overlap of two wave functions $|\psi(x)\rangle$ and $|\psi(y)\rangle$ directly. The swap test may be performed by having two parallel registers of N qubits, one for a first kernel parameter x **702** and one for a second kernel parameter y **704,** plus a single ancillary qubit **706.** Thus, the swap test requires 2N + 1 qubits where N is the number of qubits used to express $|\psi(x)\rangle$.

A quantum feature map $\mathcal{U}$ is applied to the registers for x and y, respectively, in order to obtain $|\psi(x)\rangle = U(x)$ $|0\rangle$ **708** and $|\psi(y)\rangle = U(y)|0\rangle$ **710.** Because the same feature map is applied to both registers, (conjugate) symmetry of the quantum kernel is ensured. A Hadamard gate H **712** is applied to the ancillary qubit, and then a controlled-SWAP operation **714** is performed between all qubits of the other registers, conditioned on the ancilla qubit with a control operation **716.** The controlled swap onto the size 2N register is made up of controlled swap on the $n^{th}$ qubit of each of the two size N registers, for $n \in 1: N$. Subsequently, another Hadamard gate **718** is applied to the ancillary qubit and the qubit is then measured in the Z basis **720** to read the kernel value $|\langle\psi(x)|\psi(y)\rangle|^2$.

If x and y are equal, the SWAP operation will not do anything, and hence the two Hadamard gates will combine to an X gate and the measurement results always exactly 1. If x and y are different, the controlled-SWAP gate will incur a phase-kickback on the ancillary qubit, which is detected as an average value of the measurement between 0 and 1. This way, the kernel overlap can be estimated using this circuit, which is physically implementable even on current-generation qubit-based quantum computers.

**Fig. 7B** shows a circuit diagram for an alternative implementation of a quantum kernel. This circuit may be used to determine a kernel

$$\kappa(x,y) = \langle \psi(x)|\psi(y)\rangle = \langle 0 | \mathcal{U}^\dagger(x)\, \mathcal{U}(y) | 0 \rangle \qquad (40)$$

or functions thereof. Using this circuit, the real and imaginary parts of the overlap $\langle \psi(x)|\psi(y)\rangle$ may be measured by means of a so-called 'Hadamard-test'. In this case, both $x$ and $y$ are mapped to one register of $N$ qubits **722**. A single ancillary qubit **724** may be used for measurements. Thus, the swap test requires $N + 1$ qubits where $N$ is the number of qubits used to express $|\psi(x)\rangle$.

First a Hadamard gate **728** is applied to the ancillary qubit. Then, an (undaggered) feature map $\mathcal{U}(y)$ is applied to the register to create a quantum state $|\psi(y)\rangle = U(y) |0\rangle$, followed by a daggered feature map $\mathcal{U}^\dagger(x)$, in order to obtain a quantum state $|\psi(x,y)\rangle = U^\dagger(x) U(y) |0\rangle$ **730**. The application of the feature maps is controlled by the ancillary qubit **732**. This circuit employs the identity

$$\langle \psi(x)|\psi(y)\rangle = \langle 0 | \mathcal{U}^\dagger(x)\, \mathcal{U}(y) | 0 \rangle = \langle 0 | \psi(x,y)\rangle \qquad (41)$$

An S-gate $S^b = \exp(-i\, b\, \pi Z/4)$ is then applied **734** to the ancillary qubit, where Z is the Pauli-Z operator. It is noted that if $b = 0$, this gate does nothing. This is followed by an Hadamard gate **736** and then a measurement operation **738.** Steps **734-738** are applied twice, once with $b = 0$ to measure the real part of the overlap $\mathrm{Re}(\langle \psi(x)|\psi(y)\rangle)$ and once with $b = 1$ to measure the imaginary part of the overlap $\mathrm{Im}(\langle \psi(x)|\psi(y)\rangle)$.

Based on these measurements, various kernels may be constructed (typically using a classical computer), e.g.

$$\kappa(x,y) = \langle \psi(x)|\psi(y)\rangle = \mathrm{Re}(\langle \psi(x)|\psi(y)\rangle) + \mathrm{Im}(\langle \psi(x)|\psi(y)\rangle) \qquad (42)$$

or

$$\kappa(x,y) = |\langle \psi(x)|\psi(y)\rangle|^2 = \mathrm{Re}(\langle \psi(x)|\psi(y)\rangle)^2 + \mathrm{Im}(\langle \psi(x)|\psi(y)\rangle)^2. \qquad (43)$$

**Fig. 7C** shows a quantum circuit diagram for an alternative implementation of a quantum kernel measurement. The quantum circuit is similar to **Fig. 7B,** but instead of the controlled-unitary **730,** a control-free version **742** of the (same) unitary is used. Finally, all $N$ qubits are measured (rather than only the ancillary qubit), and the number of times a zero is observed divided by the total number of measurements is an estimate of the kernel value $|\langle \psi(x)|\psi(y)\rangle|^2$.

**Fig. 7D** shows a quantum circuit that implements arbitrary-order derivatives of the kernel function as overlap measurement by means of a so-called 'SWAP-test', while **Fig. 7E** shows a quantum circuit that implements arbitrary-order derivatives of the kernel function as overlap measurement by means of a so-called 'Hadamard-test' and **Fig. 7F** shows a quantum circuit that implements arbitrary-order derivatives of the kernel function as overlap measurement by means of evaluating the expectation value of the $|0\rangle\langle 0|$ operator. As was mentioned earlier, the quantum-kernel based regression methods described herein may be used to numerically solve differential equations. Solving differential equations using a quantum kernel requires evaluating derivatives of the quantum kernel.

The circuit structure in **Fig. 7D** is same as in **Fig. 7A,** except for the unitary operators used to create the quantum state: in this case derivatives **746,748** of the unitary operators **708,710** are used.

The circuit structure in **Fig. 7E** is same as in **Fig. 7B,** except for the unitary operators used to create the quantum state. Instead of encoding a quantum state $|\psi(x,y)\rangle = \mathcal{U}^\dagger(x)\, \mathcal{U}(y) |0\rangle$, derivatives of the kernel feature map $\mathcal{U}$ are used in the controlled-unitary operation **750** (replacing controlled-unitary operation **730)** in order to measure the real and imaginary parts of the overlap

$$\left\langle 0 \left| \frac{\mathrm{d}^m}{\mathrm{d}x^m} \mathcal{U}_k^\dagger(x)\, \frac{\mathrm{d}^n}{\mathrm{d}y^n} \mathcal{U}_j(y) \right| 0 \right\rangle. \qquad (44)$$

Here, $k$ and $j$ are indices denoting the gates that are being differentiated with respect to the $x$ and $y$ parameters, respectively; by summing over $j$ and $k$, the full overlap $\left\langle 0 \left| \frac{\mathrm{d}^m}{\mathrm{d}x^m} \mathcal{U}_k^\dagger(x)\, \frac{\mathrm{d}^n}{\mathrm{d}y^n} \mathcal{U}_j(y) \right| 0 \right\rangle$ can be evaluated. Any order of derivative *n* or m, with respect to *x* or *y* respectively, can be considered, in any dimension for either.

The circuit structure in **Fig. 7F** is same as in **Fig. 7C,** except for the unitary operators used to create the quantum state, which involves (again) a derivative **752** of the unitary operator **742** used in **Fig. 7C.**

These overlaps can then be used to evaluate kernel derivatives. As an example, this will be shown for $\nabla^0_1 \kappa(x, y)$ where $\kappa(x,y) = |\langle \psi(x)|\psi(y)\rangle|^2$. The first-order derivative in *x* of the quantum kernel may be determined using the product rule on eq. (39), leading to the following result:

$$\frac{\partial}{\partial x}\kappa(x,y) = \left\langle 0 \left| \mathcal{U}^\dagger(y)\frac{\mathrm{d}}{\mathrm{d}x}\mathcal{U}(x)\right| 0\right\rangle \left\langle 0 \left| \mathcal{U}^\dagger(x)\,\mathcal{U}(y)\right| 0\right\rangle$$
$$+ \left\langle 0 \left| \mathcal{U}^\dagger(y)\,\mathcal{U}(x)\right| 0\right\rangle \left\langle 0 \left| \frac{\mathrm{d}}{\mathrm{d}x}\mathcal{U}^\dagger(x)\,\mathcal{U}(y)\right| 0\right\rangle. \tag{45}$$

This derivative can be evaluated by evaluating $\left\langle 0 \left| \mathcal{U}^\dagger(y)\frac{\mathrm{d}}{\mathrm{d}x}\,\mathcal{U}(x)\right| 0\right\rangle$ and $\left\langle 0 \left| \mathcal{U}^\dagger(y)\,\mathcal{U}(x)\right| 0\right\rangle$ (real and imaginary parts) and taking their conjugates. The latter can be evaluated using the method described above with reference to **Fig. 7B,** the former using the method described with reference to **Fig. 7E.**

The methods described in **Fig. 7D** and **Fig. 7F** can similarly be used to evaluate absolute squared values of the overlaps of the quantum kernel derivatives.

The calculations performed to evaluate the quantum kernel can be reused to evaluated the derivatives of the quantum kernel, because the derivatives and the kernel itself are evaluated over the same set of points. To calculate the former, a modified Hadamard test can be used, as will be illustrated with the following example.

In this example, $\mathcal{U}'(x)$ is assumed to be of the form $U(x) = V_0\,\mathcal{U}_{\phi_1}(x)\,V_1\,...\,\mathcal{U}_{\phi_M}(x)\,V_M$ (as described above with reference to **Fig. 6D)** with each $\mathcal{U}_{\phi_j}(x) = \exp\left(-i\,\mathcal{G}_j\,\phi_j(x)\right)$. For this case, $\mathcal{U}'(x) = \sum_{j=1}^{M}\mathcal{U}_{0:j-1}\mathcal{U}_{\phi_j}\left(-i\,\mathcal{G}_j\,\phi'_j(x)\right)\mathcal{U}_{j+1:N}$ with $\mathcal{U}_{j:k} = V_j\,\mathcal{U}_{\phi_1}(x)\,V_{j+1}\,...\,\mathcal{U}_{\phi_k}(x)\,V_k$, where a prime denotes a first-order derivative with respect to x. It can be assumed that the $\mathcal{G}_j$ are unitary - if they were not, they could be decomposed into sums of unitary terms and the relevant Hadamard tests could be calculated for each sum in the term. When $\mathcal{G}_j$ is indeed unitary, it can be implemented as a quantum circuit, so each term in the derivative expansion can then be calculated with two Hadamard tests.

Similar computations can be used to evaluate other derivatives, such as higher-order derivatives, derivatives d/dy with respect to *y*, etc. In general, using the product rule on eq. (39) or (40), any derivative can be expressed as sums of products of overlaps with *U(x)* and *U(y)* differentiated to different orders. These overlaps can be calculated with two (when the generators are unitary) overlap tests for each gate with *x* respectively *y* as a parameter. These overlap evaluations can be reused for calculating different derivatives where the same overlap occurs.

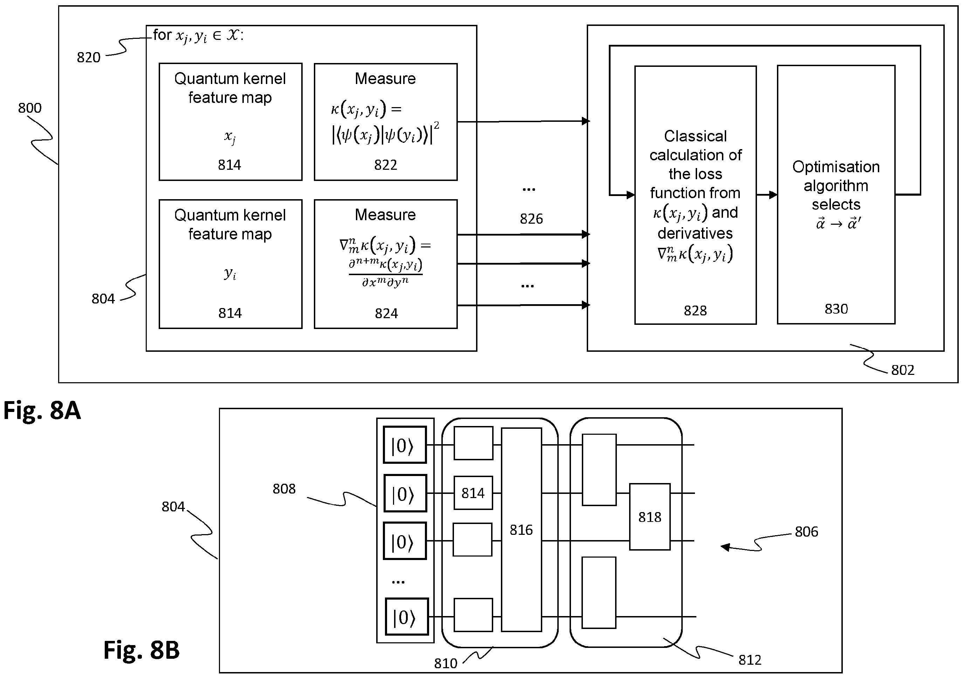

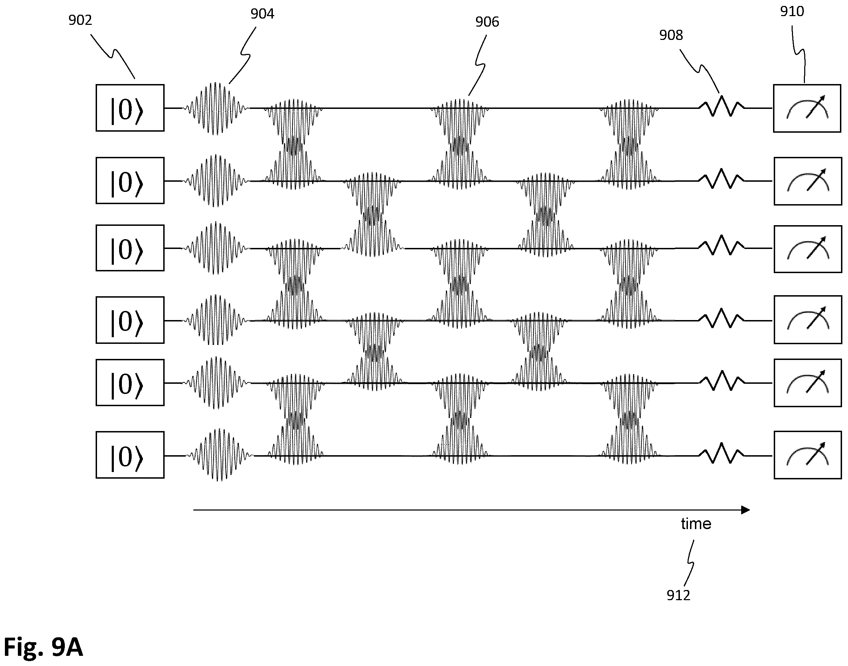

**Fig. 8A** and **8B** schematically depict a method for solving a regression problem using a quantum kernel according to an embodiment. In particular, **Fig. 8A** shows a high-level schematic of the interplay in a hybrid computer system **800** between a classical computer **802** and a quantum computer **804,** while **Fig. 8B** depicts a schematic of the quantum computer **804.** The quantum computer executes gate sequences called 'quantum circuits' **806,** for example those described above with reference to **Fig. 7A-F.** These quantum circuits typically comprise a qubit initialization step **808,** followed by sequences **810,812** of digital **814,818** and/or analog gates **816.** These gates can be, for example, unitary operations on a quantum state or measurement operations. Examples of hardware-level schematics to implement these quantum circuits are discussed in more detail below with reference to **Fig. 9A-D.**

In the methods described in this disclosure, these quantum circuits can be used for evaluating quantum kernels and/or derivatives thereof, i.e., to determine a kernel value $\kappa(x_j,y_i)$ and/or a kernel derivative value $\nabla^n_m\kappa(x_j, y_i)$, given two input parameters $x_j$ and $y_i$. This is done by performing gate sequences **814,** which may be referred to as quantum kernel circuits, or quantum kernel feature maps, for each point $x_j$ and $y_i$ in the problem domain **820.** These quantum kernel feature maps can comprise the unitary operations discussed above with reference to **Fig. 6A-C.** Subsequently, the kernel value may be measured as a wavefunction overlap **822,** preferably using the strategies depicted in **Fig. 7A-F.** Additionally or alternatively, derivatives of the kernel function can be computed on the quantum computer using similar gate sequences resulting in a measurement of a kernel derivative value **824.** The measurement of a kernel value typically involves repeated measurements on the same circuit, the quantity of interest being an average of the repeated measurements.

Data representing the measurements are transferred **826** to the classical computer **802.** Typically, the data are transferred only once all calculations on the quantum computer are finished. Then, an optimisation step is performed **828,** based on the data received from the quantum computer representing the kernel values and/or its derivatives. The optimisation step may comprise minimising a loss function and/or solving a linear optimisation problem. The optimisation step is performed on the classical computer using a classical algorithm **830,** e.g., in a loop or using linear algebraic methods, with respect to classical parameters $\alpha$ of the optimisation problem, and, where necessary, reusing the same kernel values and/or kernel derivative values in each optimisation step.

**Fig. 9A** is a hardware-level schematic of the actions effectuating the logical operations shown in circuit diagrams such as **Fig. 7A-F** and **Fig. 8.** Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **902.** Then, for example a series of single-qubit pulses is sent to the qubit array in **904,** which may apply a single-layer feature map. Additionally, two-qubit pulse sequences can be used to effectively entangle multiple qubits with a feature map **906.** The duration, type, strength and shape of these pulses determine the effectuated quantum logical operations. **908** indicates a 'break' in the depicted timeline, which means the sequence of gates may be repeated in a similar fashion in the direction of the time axis **912.** At the end of the pulse sequences, one or more of the qubits are measured **910.**

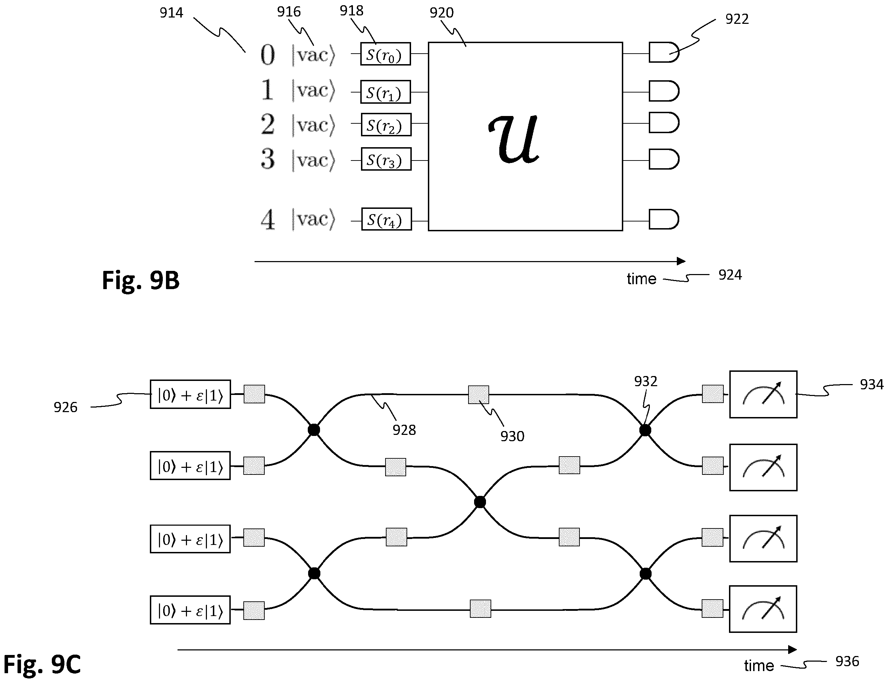

**Fig. 9B** is a hardware-level schematic of the actions effectuating the logical operations shown in circuit diagrams such as **Fig. 7A-F** and **Fig. 8,** specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parameterized way.

Initially the modes **914** are all in the vacuum state **916,** which are then squeezed to produce single-mode squeezed vacuum states **918.** The duration, type, strength and shape of controlled-optical gate transformations determine the effectuated quantum logical operations **920.** At the end of the optical paths, one or more modes are measured with photon-number resolving, Fock basis measurement **922,** tomography or threshold detectors.

**Fig. 9C** is a hardware-level schematic of the actions effectuating the logical operations shown in circuit diagrams such as **Fig. 7A-F** and **Fig. 8,** specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parameterized way.

Initially the modes **926** are all in a weak coherent state, which is mostly a vacuum state with a chance of one or two photons and negligibly so for higher counts. Subsequently, the photons travel through optical waveguides **928** through delay lines **930** and two-mode couplers **932** which can be tuned with a classical control stack, and which determines the effectuated quantum logical operations.

At the end of the optical paths, one or more modes are measured with photon-number resolving **934,** or threshold detectors.

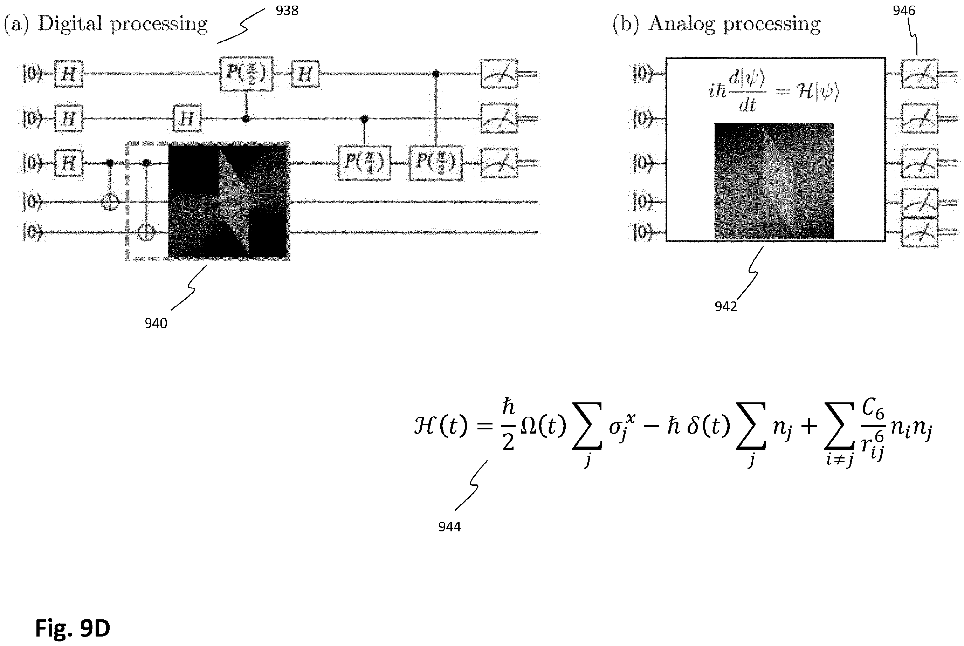

**Fig. 9D** is a hardware-level schematic of the actions effectuating the logical operations shown in circuit diagrams such as **Fig. 7A-F** and **Fig. 8,** specified for a neutral-atom-based quantum computer. On this type of hardware, unitary operators, e.g. those used to encode the quantum kernel feature map and derivatives thereof, can be decomposed in two different kinds of operations: digital or analog. Both of these operations are transformations in the quantum Hilbert space over atomic states.

In the digital mode, laser pulses are used to effectuate transitions between atomic states which effectively implement sets of standardized or 'digital' rotations on computational states. These digital gates may include any single-qubit rotations, and a controlled-pauli-Z operation with arbitrary number of control qubits.

In the analog mode, laser light is applied to groups of, or all, atoms at the same time, with certain properties like detuning, Rabi frequencies and Rydberg interactions effectively driving Hamiltonian evolution of the atomic array in an analog way. The combined quantum wavefunction evolves according to Schrödinger's equation, and particular,

unitary operators $\mathcal{U}$ = e$^{-i}$ $\mathcal{H}$ $^{t}$, where $H$ denotes the Hamiltonian and $t$ the time, can be designed by pulse-shaping the parameterized coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each.

In order to transform the internal states of these modes, a classical control stack is used to send information to optical components and lasers. The controller may formulate the programmable unitary transformations in a parameterized way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

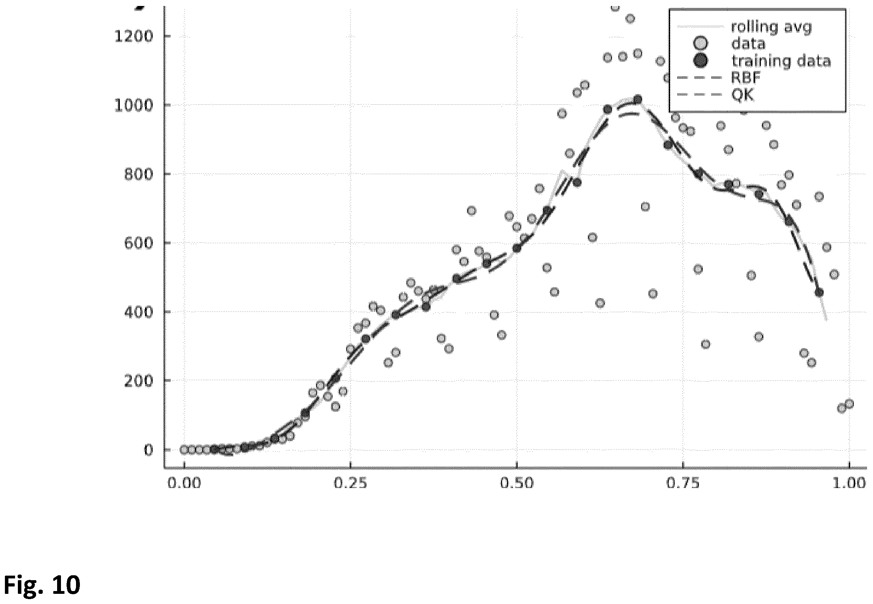

**Fig. 10** show a solution to a data regression problem obtained using a quantum kernel methods, and, for comparison, using a classical method. For this example. data from a data set of covid-19 test results from Chicago is used, covering a period from 1 March to 31 May 2020 (the source file is available at: https://github.com/Ayushijain09/Regression-on-COVID-dataset/blob/master/COVID-19_Daily_Testing.csv). For each data in the covered period, the number of positive test results is plotted (light circles). (To simplify computations, the date range was rescaled to the [0,1] interval, which was labelled with x.) A seven day rolling average over this data was computed. This has the benefit of regularising the effect of reduced reporting of test data over the weekend. A uniformly spaced subset of 21 of these rolling averages (dark circles) and associated x-values are taken to be used as target data for regression.

**Fig. 10A** depicts the results of the mixed-model regression approach discussed above with reference to **Fig. 4A.** For this example, (using the same notation as above) $\{x_i\}_{i=1}^{21}$ were the 21 dates associated with the subset of rolling averages $\{f_i\}_{i=1}^{21}$, and the evaluation points were chosen equal to the training data, i.e., $y_i = x_i$ for $i$ = 1, ...,21. The classical method used for comparison applied a radial basis function (RBF) kernel with $\sigma$ = 0.2. The results for the quantum kernel regression method was based on a simulated quantum kernel of Chebyshev tower type of five qubits. This simulation is implemented with full state simulation using the julia package Yao.jl. As a loss function, a mean squared error (MSE) function is used with a pinned boundary. As was shown above, this loss function is convex. The loss function was optimised via Newton's method, whereby an iteration number limit of 200 is used. As can be seen, both the classical and the quantum kernel types are able to closely approximate the considered function.

**Fig. 10B** depicts the results of the support-vector regression approach, discussed above with reference to **Fig. 4A,B,** applied to the same data regression problem and using the same input data as was used for **Fig. 10A.** Furthermore, the same kernels and simulation package were used. The resulting system of equations to solve for this form of problem are the same as shown in eq. (X). Again, it can be seen that both the classical and the quantum kernel types are able to closely approximate the considered function.

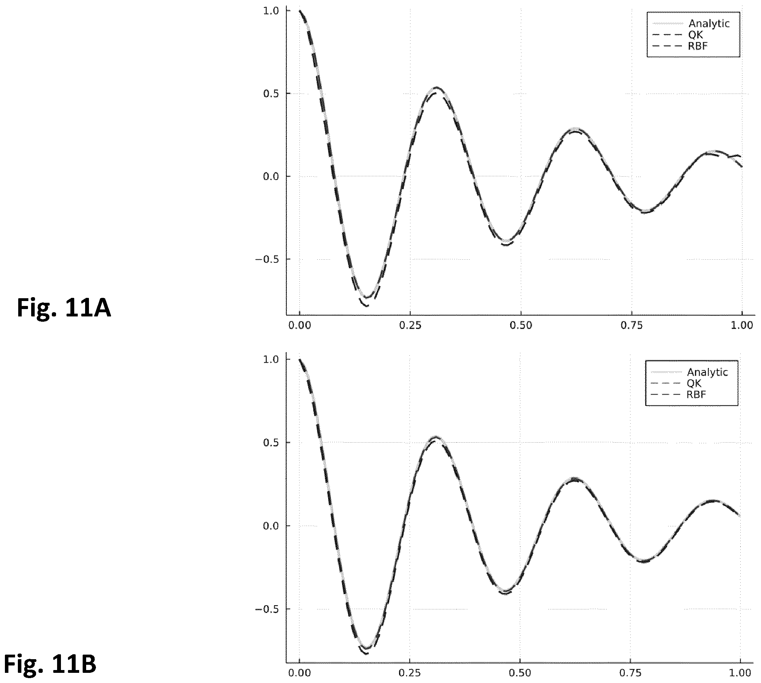

**Fig. 11A** and **11B** show a solution to a differential equation regression problem obtained using a quantum kernel methods, and, for comparison, using a classical method. For this example, a linear differential equation is used, given by:

$$\frac{\mathrm{d}f(x)}{\mathrm{d}x} = -\lambda\,\mu\,f(x) - \lambda \exp(-\lambda\,\mu\,x)\sin(\lambda\,x), \tag{46}$$

with $\lambda$ = 20 and $\mu$ = 0.1 along with initial condition $f(0)$ = 1. The analytic solution to this differential equation is $f(x) =$ exp(-$\lambda\,\mu\,x$) cos($\lambda\,x$) and is oscillatory with the magnitudes of the peaks decreasing as $x$ increases.

**Fig. 11A** depicts the solution using the mixed-model regression approach. In this case, the set $\{x_i\}_{i=1}^{20}$ comprises 20 points uniformly spaced over the interval [0,1]. Again, for comparison the equation is also solved using a classical kernel, the radial basis function kernel with $\sigma$ = 0.1. A simulated Chebyshev tower-type quantum kernel of eight qubits was used for the quantum kernel regression method. This simulation is implemented with full state simulation using the julia package Yao.jl. As a loss function, a mean squared error (MSE) function is used with a pinned boundary. As was shown above, this loss function is convex. The loss function was optimised via Newton's method. As can be seen, both the classical and the quantum kernel types are able to closely approximate the considered function.

**Fig. 11B** depicts the results of the support-vector regression approach, discussed above with reference to **Fig. 5,** applied to the same data regression problem and using the same input data as was used for **Fig. 11A.** The system of equations for the linear optimisation problem to solve for a differential equation problem of the form $df/dx + g(x)\,f +$ r(x) = 0 is

$$\begin{bmatrix} \widehat{M} & \mathbf{h}_0^1 - \widehat{D}\mathbf{h}_0^0 & \mathbf{g} \\ (\mathbf{h}_0^1 - D\mathbf{h}_0^0)^{\mathrm{T}} & \tilde{h}_0^0 & 1 \\ \mathbf{g}^{\mathrm{T}} & 1 & 0 \end{bmatrix} \begin{bmatrix} \alpha \\ \beta \\ b \end{bmatrix} = \begin{bmatrix} \tilde{\mathbf{r}} \\ f_0 \\ 0 \end{bmatrix} \tag{47}$$

where the notation is as follows

$$[\Omega_n^m]_{i,j} = \nabla_n^m \kappa\left(x_j, x_i\right)$$

$$\widetilde{\Omega}_n^m = \Omega_n^m + I/\gamma$$

$$[\mathbf{h}_n^m]_i = \nabla_n^m \kappa(x_0, x_i)$$

$$\tilde{h} = \kappa(x_0, x_0)$$

$$\widehat{D} = \mathrm{diag}(\{g(x_i)\}_i)$$

$$[\tilde{\mathbf{g}}]_i = g(x_i)$$

$$[\tilde{\mathbf{r}}]_i = r(x_i)$$

$$\widehat{M} = \Omega_1^1 - \Omega_1^0 \widehat{D} - \widehat{D}\Omega_0^1 + \widehat{D}\widetilde{\Omega}_0^0 \widehat{D}.$$

Again, it can be seen that both the classical and the quantum kernel types are able to closely approximate the considered function.

**Fig. 12A-D** show a solution to a non-linear differential equation regression problem obtained using a quantum kernel methods, and, for comparison, using a classical method. In this example, the non-damped duffing equation is solved, which reads:

$$\frac{\mathrm{d}^2 f(x)}{\mathrm{d}x^2} = c\cos(d\,x) - a\,f(x) - b\,f(x)^3 \tag{48}$$

The parameters were chosen as $\alpha$ = 1, $b$ = 1, c = 3, $d$ = 3 and the initial conditions were chosen as $f(0)$ = 1 and $f'(0)$ = 1. The equation was solved using both mixed-model regression and support-vector regression approaches. For comparison, the equation was also solved with classical numerical techniques with the julia package DifferentialEquations.jl.

**Fig. 12A** depicts the solution using the mixed-model regression approach. In this case, the set $\{x_i\}_{i=1}^{13} = \{y_i\}_{i=1}^{13}$ comprises 13 points uniformly spaced over the interval [0,1]. Again, for comparison the equation is also solved using a classical kernel, the radial basis function kernel with $\sigma$ = 0.3 (manually optimised). A simulated Chebyshev tower-type quantum kernel of five qubits was used for the quantum kernel regression method. This simulation is implemented with full state simulation using the julia package Yao.jl. As a loss function, a mean squared error (MSE) function is used with a pinned boundary. The loss function was optimised via Newton's method. As can be seen, both the classical and the quantum kernel types are able to closely approximate the considered function. The associated loss functions are shown in **Fig. 12C.**

**Fig. 12B** depicts the results of the support-vector regression approach, discussed above with reference to **Fig. 5,** applied to the same data regression problem and using the same input data as was used for **Fig. 12A.** The system of equations for the linear optimisation problem to solve for a differential equation problem of the form $d^2f/d_x^2 = g(x,f)$ is

$$\begin{bmatrix} \tilde{\Omega}_2^2 & \Omega_0^2 & \mathbf{h}_0^2 & \mathbf{h}_0^2 & \mathbf{0} & \hat{0} \\ \Omega_2^0 & \tilde{\Omega}_0^0 & \mathbf{h}_0^0 & \mathbf{h}_1^0 & \mathbf{1} & -\hat{I} \\ \mathbf{h^T}_2^0 & \mathbf{h^T}_0^0 & \tilde{h}_0^0 & \tilde{h}_1^0 & 0 & \mathbf{0}^T \\ \mathbf{h^T}_2^0 & \mathbf{h^T}_0^1 & \tilde{h}_0^1 & \tilde{h}_1^1 & 0 & \mathbf{0}^T \\ \mathbf{0}^T & \mathbf{1}^T & 0 & 0 & 0 & \mathbf{0}^T \\ \hat{D} & \hat{I} & \mathbf{0} & \mathbf{0} & \mathbf{0} & \hat{0} \end{bmatrix} \begin{bmatrix} \alpha \\ \eta \\ \beta_0 \\ \beta_1 \\ b \\ \mathbf{y} \end{bmatrix} = \begin{bmatrix} \tilde{\mathbf{g}} \\ \mathbf{0} \\ f_0 \\ df_0 \\ 0 \\ \hat{0} \end{bmatrix} \qquad (49)$$

where the notation is as follows

$$[\Omega_n^m]_{i,j} = \nabla_n^m \kappa(x_j, x_i)$$

$$\tilde{\Omega}_n^m = \Omega_n^m + \hat{I}/\gamma$$

$$[\mathbf{h}_n^m]_i = \nabla_n^m \kappa(x_0, x_i)$$

$$\tilde{h}_n^m = \nabla_n^m \kappa(x_0, x_0)$$

$$\hat{D} = \mathrm{diag}\left(\left\{\frac{\partial g}{\partial f}(x_i, f_i)\right\}_i\right)$$

$$[\tilde{\mathbf{g}}]_i = g(x_i, f_i)$$

The resulting variational function is of the form $f(x) = \beta_0 \ \kappa(x_0, \ x) + \beta_1 \nabla_1^0 \kappa(x_0, x) + \sum_j \alpha_j \nabla_2^0 \kappa(x_j, x) + \sum_j \eta_j \ \kappa(x_j, x) + b$ .

This system of non-linear differential equations is optimised with the optimiser ADAM with learning rate 0.01. As can be seen, both the classical and the quantum kernel types are able to closely approximate the considered function, although the quantum kernel outperforms the classical kernel. The associated loss functions are shown in **Fig. 12D.**

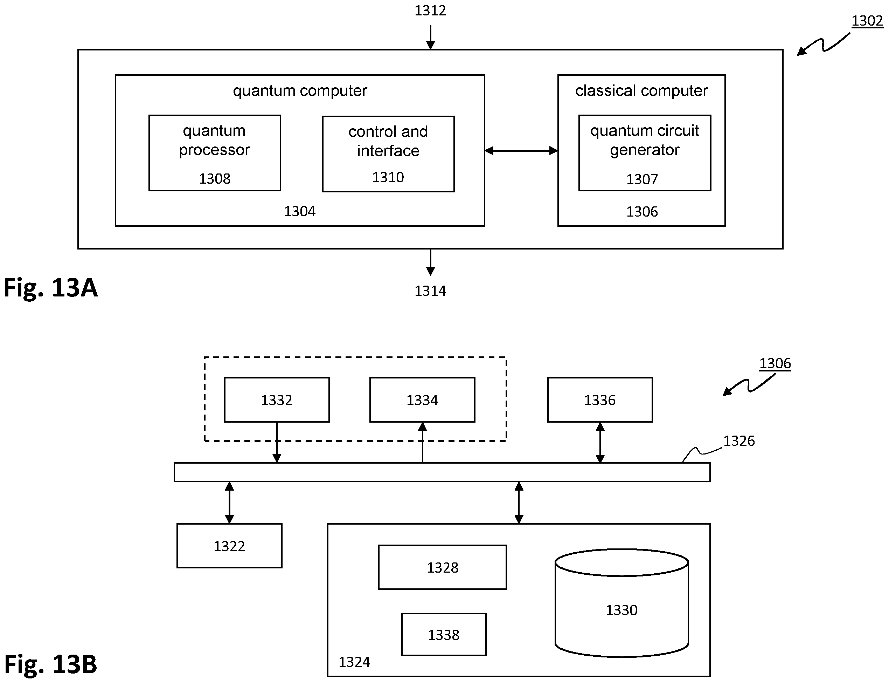

**Fig. 13A** depicts a system for simulating molecular processes using quantum computation. The simulation system **1302** may include a quantum computer system **1304** comprising one or more quantum processors **1308,** e.g. a gate-based qubit quantum processor, and a controller system **1310** comprising input output (I/O) devices which form an interface between the quantum processor and the outside world, e.g. the one or more classical processors of a classical computer **1306.** For example, the controller system may include a microwave system for generating microwave pulses which are used to manipulate the qubits. Further, the controller may include readout circuitry for readout of the qubits. For at least a part such readout circuitry may be located or integrated with the chip that includes the qubits. The system may further comprise a (purely classical information) input **1312** and an (purely classical information) output **1314.** Input data may include information about the differential equation(s) one wishes to solve. This information may include the order, degree, coefficients, boundary conditions, initial values, regularization values, etc. The input data may be used by the system to classically calculate values, e.g. parameter settings, which may be used to initialize the quantum circuit that is implemented on the quantum processor. Similarly, output data may include loss function values, sampling results, correlator operator expectation values, optimization convergence results, optimized quantum circuit parameters and hyperparameters, and other classical data.

Each of the one or more quantum processors may comprise a set of controllable two-level systems referred to as qubits. The two levels are $|0\rangle$ and $|1\rangle$ and the wave function of a $N$-qubit quantum processor may be regarded as a complex-valued superposition of $2^N$ of these distinct basis states. Examples of such quantum processors include noisy intermediate-scale quantum (NISQ) computing devices and fault tolerant quantum computing (FTQC) devices.

Furthermore, the one or more quantum processors may comprise a set of continuous variable systems, such as optical or photonic quantum computers. Furthermore, the quantum processor may comprise a Guassian Boson Sampling device.

**Fig. 13B** is a block diagram illustrating an exemplary classical data processing system described in this disclosure, for example classical computer **1306**. Classical data processing system **1320** may include at least one processor **1322** coupled to memory elements **1324** through a system bus **1326**. As such, the data processing system may store program code within memory elements **1324**. Further, processor **1322** may execute the program code accessed from memory elements **1324** via system bus **1326**. In one aspect, data processing system may be implemented as a computer that is suitable for storing and/or executing program code. It should be appreciated, however, that data processing system **1320** may be implemented in the form of any system including a processor and memory that is capable of performing the functions described within this specification.

Memory elements **1324** may include one or more physical memory devices such as, for example, local memory **1328** and one or more bulk storage devices **1330**. Local memory may refer to random access memory or other non-persistent memory device(s) generally used during actual execution of the program code. A bulk storage device may be implemented as a hard drive or other persistent data storage device. The classical data processing system **1320** may also include one or more cache memories (not shown) that provide temporary storage of at least some program code in order to reduce the number of times program code must be retrieved from bulk storage device **1330** during execution.

Input/output (I/O) devices depicted as key device **1332** and output device **1334** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1336** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1320.**

As pictured in **FIG. 13B,** memory elements **1324** may store an application **1338.** It should be appreciated that classical data processing system **1320** may further execute an operating system (not shown) that can facilitate execution of the application. Application, being implemented in the form of executable program code, can be executed by classical data processing system **1320,** e.g., by processor **1322.** Responsive to executing application, data processing system may be configured to perform one or more operations to be described herein in further detail.

In one aspect, for example, classical data processing system **1320** may represent a client data processing system. In that case, application **1338** may represent a client application that, when executed, configures classical data processing system **1320** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1338,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the embodiments in the form disclosed. Many modifications and variations will be apparent to those of ordinary skill in the art without departing from the scope and spirit of the invention. The embodiments were chosen and described in order to best explain the principles and the practical application, and to enable others of ordinary skill in the art to understand the various embodiments with various modifications as are suited to the particular use contemplated.

**Claims**

1. Method for solving a regression problem over a problem domain using a hybrid computer system, the hybrid computer system comprising a quantum computer system and a classical computer system, the method comprising:

   receiving or determining, by the classical computer system, a regression problem description and a set of kernel points in the problem domain;
   receiving or determining, by the classical computer system, a trial function associated with the regression problem, the trial function being based on a quantum kernel and being parameterized by one or more kernel coefficients, preferably the quantum kernel being based on an overlap of two wave functions;
   determining, using the quantum computer system, for each of the kernel points, a kernel value of the quantum kernel and/or a kernel derivative value of a derivative of the quantum kernel;
   determining, by the classical computer system, a set of optimal kernel coefficients based on the kernel value and/or kernel derivative value, and based on the regression problem description; and
   determining, by the classical computer system, a solution function based on the trial function and the set of optimal kernel coefficients.

2. The method as claimed in claim 1, wherein determining the kernel value and/or the kernel derivative value comprises:

   encoding a first variable $x$ in the problem domain into a first wave function $|\psi(x)\rangle$ using a first feature map;
   encoding a second variable $y$ in the problem domain into a second wave function $|\psi(y)\rangle$ using a second feature map, preferably the second feature map being the same as the first feature map or the second feature map being a Hermitian of the first feature map; and
   determining the overlap $\langle\psi(x)|\psi(y)\rangle$ of the first and second wave functions or a function thereof, the function preferably including an expectation value $|\langle\psi(x)|\psi(y)\rangle|^2$.

3. The method as claimed in claim 1 or 2, wherein determining the kernel value and/or the kernel derivative value comprises determining an expectation value $|\langle\psi(x)|\psi(y)\rangle|^2$ of the overlap of the first and second wave functions, preferably by performing a controlled SWAP-test, and/or by measuring an amplitude of a zero state of qubits encoding the first variable $x$ and/or the second variable $y$.

4. The method as claimed in any one of the preceding claims, wherein encoding the first and second variables comprises executing a unitary operation controlled by an ancilla, and wherein determining the kernel value and/or the kernel derivative value comprises determining an overlap $\langle\psi(x)|\psi(y)\rangle$ of the first and second wave functions preferably by performing an Hadamard-test on the ancilla.

5. The method as claimed in any one of the preceding claims, further comprising determining a function value for an evaluation point, the determination of the function value comprising:

   receiving or determining, by the classical computer system, the evaluation point;
   determining, using the quantum computer system, for each of the kernel points, a kernel value of the quantum kernel for the evaluation point; and,
   determining, by the classical computer system, the function value based on the determined kernel values and the set of optimal kernel coefficients.

6. The method as claimed in any one of the preceding claims, where the regression problem includes a differential equation problem, and wherein the determination of the kernel derivative value comprises the determination of one or more derivatives of the quantum kernel; and/or
   wherein the regression problem includes data regression and wherein the regression problem description comprises a set of training data in the problem domain and associated training values.

7. The method as claimed in any one of the preceding claims, wherein the regression problem description comprises a linear optimization problem, and wherein determination of the set of optimal kernel coefficients comprises solving a set of linear equations; and/or
   wherein the regression problem description comprises a loss function, and wherein determination of the set of optimal kernel coefficients comprises minimising the loss function.

8. The method as claimed in any one of the preceding claims, wherein the quantum kernel depends on one or more hyperparameters;

the method further comprising determining, by the classical computer system, a derivative of the loss function with respect to the one or more hyperparameters;
and wherein the determination of the set of optimal kernel coefficients is based on the determined derivative of the loss function with respect to the one or more hyperparameters.

9. The method as claimed in any one of the preceding claims, wherein the determination of the kernel value and/or the kernel derivative value comprises:

receiving or determining, by the classical computer system, a formulation of quantum circuits representing the quantum kernel and/or its derivative representations with respect to one or more variables in the problem domain; and
for each of the kernel points, performing the steps of:

- translating, by the classical computer system, the quantum circuits into first control signals for controlling quantum elements of the quantum computer system;
- determining, by the classical computer system, second control signals for readout of the quantum elements to obtain hardware measurement data;
- controlling, by the classical computer system, the quantum computer system based on the first and second control signals;
- receiving, by the classical computer system, in response to the execution of the quantum circuits, the hardware measurement data; and
- processing, by the classical computer system, the hardware measurement data into the kernel value and/or the kernel derivative value.

10. The method as claimed in claim 9, wherein the first control signals include a sequence of pulses and wherein the second control signals include applying a read-out pulse to the quantum elements of the quantum computer system.

11. A hybrid computer system solving a regression problem over a problem domain using a hybrid computer system, the hybrid computer system comprising a quantum computer system and a classical computer system, wherein the system is configured to perform executable operations, the executable operations comprising the steps of:

receiving or determining, by the classical computer system, a regression problem description and a set of kernel points in the problem domain;
receiving or determining, by the classical computer system, a trial function associated with the regression problem, the trial function being based on a quantum kernel and being parameterized by one or more kernel coefficients, preferably the quantum kernel being based on an overlap of two wave functions;
determining, using the quantum computer system, for each of the kernel points, a kernel value of the quantum kernel and/or a kernel derivative value of a derivative of the quantum kernel;
determining, by the classical computer system, a set of optimal kernel coefficients based on the kernel value and/or kernel derivative value, and based on the regression problem description; and
determining, by the classical computer system, a solution function based on the trial function and the set of optimal kernel coefficients.

12. The system as claimed in claim 11, wherein the executable operations further comprise any of the methods steps according to claims 2-10.

13. A computer program product comprising software code portions configured for, when run in the memory of a computer, executing the method steps according to any one of claims 1-10.

14. A non-transitory computer-readable storage medium storing at least one software code portion, the software code portion, when executed or processed by a computer, is configured to perform the method as claimed in any one of claims 1-10.

**Fig. 1A**

**Fig. 1B**

**Fig. 2A**

**Fig. 2B**

EP 4 242 934 A1

| | |
|---|---|
| 302 | Receive or determine regression problem description over problem domain $\mathcal{X}$, e.g., data $\{x_j, f_j\}_{j=1}^{M}$, $x_j \in \mathcal{X}$, or differential equation $DE\left(x, f(x), \left\{\frac{\partial^n f}{\partial x^n}\right\}, \ldots\right)$, $x \in \mathcal{X}$ |

$\downarrow$

| | |
|---|---|
| 304 | Determine or receive kernel points $\{x_i\}_{i=1}^{N}, x_i \in \mathcal{X}$ |

$\downarrow$

| | |
|---|---|
| 306 | Determine or receive trial function $f_\alpha(x)$, typically $f_\alpha(x) = \alpha_0 + \sum_{i=1}^{N} \alpha_i \, \kappa(x, x_i)$ |

$\downarrow$

308

| $308_1$ MMR: define loss function based on trial function and regression problem description | $308_2$ SVR: define linear optimisation problem based on trial function and regression problem description |
|---|---|

$\downarrow$

| | |
|---|---|
| 310 | Determine quantum kernel values $\kappa(x, x_i)$ and/or one or more quantum kernel derivative values $\nabla_n^m \kappa(x, x_i)$, using a quantum computer system |

$\downarrow$

312

| $312_1$ MMR: Optimise trial function w.r.t $\{\alpha_i\}_{i=1}^{N}$ by minimizing loss function | $312_2$ SVR: Optimise trial function w.r.t $\{\alpha_i\}_{i=1}^{N}$ by solving system of equations based on optimisation problem |
|---|---|

$\downarrow$

| | |
|---|---|
| 314 | Given optimised $\{\alpha_i\}_{i=1}^{N}$, determine $f_{sol}(x)$ as solution to the regression problem |

$\downarrow$

| | |
|---|---|
| 316 | Computing $f_{sol}(y)$ for a given value $y \in \mathcal{X}$, the computation comprising the determining of the quantum kernel $\kappa(y, x_i)$ using the quantum computer system |

**Fig. 3**

| 402 | Receive or determine a set of training data $\{x_j, f_j\}_{j=1}^{M}$, with $x_j \in \mathcal{X}$ and $f_j \in \mathcal{Y}$ |

| 404 | Determine or receive kernel points $\{y_i\}_{i=1}^{N}, y_i \in \mathcal{X}$ |
| 406 | Kernel points $\{y_i\}_{i=1}^{N} = \{x_j\}_{j=1}^{M}$ |

| 408 | Determine or receive trial function $f_\alpha(x)$, preferably $f_\alpha(x) = \sum_{i=1}^{N} \alpha_i \kappa(x, y_i) + \alpha_0$ |

| 410 | Define loss function $\mathcal{L}(\alpha)$ based on trial function and training data, e.g., $$\mathcal{L}(\alpha) = \sum_{j=1}^{M}(f_\alpha(x_j) - f_j)^2$$ |
| 412 | Define system of equations based on trial function and training data, e.g., $$\begin{bmatrix} \kappa(x_j, y_i) + I/\gamma & \mathbf{1} \\ \mathbf{1}^{\mathrm{T}} & 0 \end{bmatrix} \begin{bmatrix} \alpha \\ \alpha_0 \end{bmatrix} = \begin{bmatrix} f \\ 0 \end{bmatrix}$$ |

| 414 | Determine quantum kernel values $\kappa(x_j, y_i)$ for $\{x_j, y_i\}_{i=1, j=1}^{N,M}$, using a quantum computer system |

| 416 | Optimise trial function w.r.t $\{\alpha_i\}_{i=0}^{N}$ by minimizing loss function $\mathcal{L}(\alpha)$ to obtain $\{\alpha_{\mathrm{opt},i}\}_{i=0}^{N}$ |
| 418 | Solve system of equations to obtain $\{\alpha_{\mathrm{opt},i}\}_{i=0}^{N}$ |

| 420 | Given optimised $\{\alpha_{\mathrm{opt},i}\}_{i=0}^{N}$, determine $f_{\mathrm{sol}}(x)$ as solution to the regression problem, preferably $f_{\mathrm{sol}}(x) = \sum_{i=1}^{N} \alpha_{\mathrm{opt},i} \kappa(x, y_i) + \alpha_{\mathrm{opt},0}$ |

| 422 | Computing $f_{\mathrm{sol}}(x)$ for a given value $x \in \mathcal{X}$, the computation comprising the determining quantum kernel values $\kappa(x, y_i)$ for $\{y_i\}_{i=1}^{N}$ using the quantum computer system |

**Fig. 4A**

430

Determine fitting function, e.g., $f(x) = \boldsymbol{w}^\dagger \boldsymbol{\varphi}(x) + b$ with dual representation $f_\alpha(x) = \sum_{i=1}^{N} \alpha_i \, \kappa(x, y_i) + \alpha_0$

432

Determine primal optimisation model, e.g.,

$$\min{}_{\boldsymbol{w},b,e} \{\boldsymbol{w}^\dagger \boldsymbol{w} + \gamma \, \boldsymbol{e}^\dagger \boldsymbol{e}\}, \text{subject to } f_i = \boldsymbol{w}^\dagger \boldsymbol{\varphi}(x_i) + b + e_i \text{ for } i = 1{:}N$$

434

Determine Lagrangian $\mathcal{L}$ based on the trial function, e.g.,

$$\mathcal{L} = \tfrac{1}{2}\big(\boldsymbol{w}^\dagger \boldsymbol{w} + \gamma \, \boldsymbol{e}^\dagger \boldsymbol{e}\big) - \sum_{j=1}^{N} \alpha_i \big(\boldsymbol{w}^\dagger \boldsymbol{\varphi}(x_j) + b + e_j - f_j\big)$$

436

Determine the Karush-Kuhn-Tucker (KKT) optimality conditions

438

Eliminate a subset of primal variables from the Lagrangian, using the Karush-Kuhn-Tucker conditions

440

Apply the kernel trick to rewrite $\boldsymbol{w}^\dagger \boldsymbol{\varphi}(x_j)$ as a kernel $\kappa(x_j, y_i)$

442

Define system of equations based on trial function and training data, e.g.,

$$\begin{bmatrix} \kappa(x_j, y_i) + I/\gamma & \mathbf{1} \\ \mathbf{1}^T & 0 \end{bmatrix} \begin{bmatrix} \alpha \\ \alpha_0 \end{bmatrix} = \begin{bmatrix} f \\ 0 \end{bmatrix}$$

## Fig. 4B

**502** Receive or determine a differential equation $(x, f, \mathrm{d}f/\mathrm{d}x) = \frac{\mathrm{d}f}{\mathrm{d}x} - g(x, f) = 0$ with $f(x_0) = f_0$, $x \in \mathcal{X}$

**504** Determine or receive kernel points $\{y_i\}_{i=1}^N$, $y_i \in \mathcal{X}$

and training points $\{x_j\}_{j=1}^M$, $x_j \in \mathcal{X}$

**506** Determine or receive kernel points $\{y_i\}_{i=1}^N$, $y_i \in \mathcal{X}$

and training points $\{x_j\}_{j=1}^M$, with $\{y_i\}_{i=1}^N = \{x_j\}_{j=1}^M$

**510** Determine or receive trial function $f_\alpha(x)$, preferably $f_\alpha(x) = \sum_{i=1}^N \alpha_i \, \kappa(x, y_i) + b$

**512** Define loss function $\mathcal{L}(\alpha)$ based on trial function and training data, e.g.,

$$\mathcal{L}(\alpha) = \sum_{j=1}^M \left( DE\left(x_j, f_\alpha(x_j), \frac{\mathrm{d}f_\alpha(x_j)}{\mathrm{d}x}\right) \right)^2 + (f_\alpha(x_0) - f_0)^2$$

**514** Define system of equations based on trial function and differential equation, e.g.,

$$
\begin{bmatrix}
\tilde{\Omega}_1^1 & \Omega_0^1 & \mathbf{h}_0^1 & \mathbf{0} & \hat{0} \\
\Omega_1^0 & \tilde{\Omega}_0^0 & \mathbf{h}_0^0 & \mathbf{1} & -\hat{I} \\
\mathbf{h}_1^{\mathrm{T}0} & \mathbf{h}_0^{\mathrm{T}0} & \tilde{h} & 1 & \mathbf{0}^{\mathrm{T}} \\
\mathbf{0}^{\mathrm{T}} & \mathbf{1}^{\mathrm{T}} & 1 & 0 & \mathbf{0}^{\mathrm{T}} \\
\hat{D} & \hat{I} & \mathbf{0} & \mathbf{0} & \mathbf{0}
\end{bmatrix}
\begin{bmatrix}
\alpha \\
\eta \\
\beta \\
b \\
\mathbf{f}
\end{bmatrix}
=
\begin{bmatrix}
\tilde{\mathbf{g}} \\
\mathbf{0} \\
f_0 \\
0 \\
\hat{0}
\end{bmatrix}
$$

**516** Determine quantum kernel values $\kappa(x_j, y_i)$ and/or quantum kernel derivatives values $\nabla_m^n \kappa(x_j, y_i)$

for $\{x_j, y_i\}_{i=1,j=1}^{N,M}$, using a quantum computer system

**518** Optimise trial function w.r.t $\{\alpha_i\}_{i=1}^N$ and $b$ by minimizing loss function $\mathcal{L}(\alpha)$ to obtain $\{\alpha_{\mathrm{opt},i}\}_{i=1}^N$, $b_{\mathrm{opt}}$

**520** Solve system of equations to obtain $\{\alpha_{\mathrm{opt},i}\}_{i=0}^N$, $b_{\mathrm{opt}}$

**522** Given optimised $\{\alpha_{\mathrm{opt},i}\}_{i=0}^N$, determine $f_{\mathrm{sol}}(x)$ as solution to the regression problem, preferably $f_{\mathrm{sol}}(x) = \sum_{i=1}^N \alpha_{\mathrm{opt},i} \, \kappa(x, y_i) + b_{\mathrm{opt}}$,

**524** Computing $f_{\mathrm{sol}}(x)$ for a given value $x \in \mathcal{X}$, the computation comprising the determining of the quantum kernel $\kappa(x, y_i)$ for $\{y_i\}_{i=1}^N$ using the quantum computer system

**Fig. 5**

Fig. 6A

$$R_Y(\varphi(x))$$

604

$\Updownarrow$

$|0\rangle$ — $R_Y(x)$ —

$|0\rangle$ — $R_Y(x)$ —

$|0\rangle$ — $R_Y(x)$ —

$|0\rangle$ — $R_Y(x)$ —

...

602

Fig. 6B

$$R_Y(\varphi(x) \pm \pi/2)$$ 612

$\Updownarrow$

$614_1$

$|0\rangle$ — $R_Y(x)$ —

$|0\rangle$ — $R_Y(x)$ —

$|0\rangle$ — $R_Y(x)$ —

$|0\rangle$ — $R_Y(x)$ —

...

$610_1$

$+$

— $R_Y(x)$ —

$614_2$

— $R_Y(x)$ —

— $R_Y(x)$ —

— $R_Y(x)$ —

...

$610_2$

$+$

— $R_Y(x)$ —

— $R_Y(x)$ —

$614_6$

— $R_Y(x)$ —

— $R_Y(x)$ —

...

$610_6$

$+$

— $R_Y(x)$ —

— $R_Y(x)$ —

— $R_Y(x)$ —

$614_4$

— $R_Y(x)$ —

...

$610_4$

Fig. 6C

$$R_Y(\varphi(x))$$

$\Updownarrow$

620

$|0\rangle$ — $R_Y(x)$ —

$|0\rangle$ — $R_Y(x)$ —

$|0\rangle$ — $R_Y(x)$ — $e^{-i\mathcal{H}\tau}$ —

$|0\rangle$ — $R_Y(x)$ —

...

38

$$\mathcal{U}(x) = \;\cdot\cdot\; \boxed{\mathcal{V}_1} \; \boxed{\mathcal{U}_{\phi_1}(x)} \; \boxed{\mathcal{V}_2} \;\cdot\cdot\; \boxed{\mathcal{V}_M} \; \boxed{\mathcal{U}_{\phi_M}(x)} \;\cdot\cdot$$

**Fig. 6D**

622   $624_1$   626   $624_2$   $624_M$   628

$$\mathcal{U}_{\vec{\theta},\phi}(x) = \; \boxed{\begin{array}{c} R_Y(\phi(x)) \\ 634 \\ R_Z(\theta_1) \\ \cdots \end{array} \; MS(\theta_2)}$$

636   642   638   640   632   630

**Fig. 6E**

Fig. 7A

Fig. 7B

Fig. 7C

39

EP 4 242 934 A1

**Fig. 7D**

$$|0\rangle \quad H \quad \bullet \quad H$$

746

$$|0\rangle \quad \cdots \quad \frac{\mathrm{d}^m}{\mathrm{d}x^m}\,\mathcal{U}_k(x)$$

748

$$|0\rangle \quad \cdots \quad \frac{\mathrm{d}^n}{\mathrm{d}y^n}\,\mathcal{U}_j(y) \quad \text{SWAP} \quad \cdots$$

**Fig. 7E**

$$|0\rangle \quad H \quad \bullet \quad S^b \quad H$$

750

$$|0\rangle \quad \cdots \quad \frac{\mathrm{d}^m}{\mathrm{d}x^m}\,\mathcal{U}_k^\dagger(x) \quad \frac{\mathrm{d}^n}{\mathrm{d}y^n}\,\mathcal{U}_j(y) \quad \cdots$$

**Fig. 7F**

752

$$|0\rangle \quad \cdots \quad \frac{\mathrm{d}^m}{\mathrm{d}x^m}\,\mathcal{U}_k^\dagger(x) \quad \frac{\mathrm{d}^n}{\mathrm{d}y^n}\,\mathcal{U}_j(y) \quad \cdots$$

Fig. 8A

800

820 — for $x_j, y_i \in \mathcal{X}$:

Quantum kernel feature map $x_j$ — 814

Measure $\kappa(x_j, y_i) = |\langle \psi(x_j)|\psi(y_i)\rangle|^2$ — 822

Quantum kernel feature map $y_i$ — 814

Measure $\nabla_m^n \kappa(x_j, y_i) = \frac{\partial^{n+m}\kappa(x_j, y_i)}{\partial x^m \partial y^n}$ — 824

804

826

802

Classical calculation of the loss function from $\kappa(x_j, y_i)$ and derivatives $\nabla_m^n \kappa(x_j, y_i)$ — 828

Optimisation algorithm selects $\vec{\alpha} \rightarrow \vec{\alpha}'$ — 830

Fig. 8B

804

$|0\rangle$ $|0\rangle$ $|0\rangle$ ... $|0\rangle$ — 808

814

816

818

806

810

812

**Fig. 9A**

EP 4 242 934 A1

**Fig. 9B**

time _____ 924

**Fig. 9C**

time _____ 936

EP 4 242 934 A1

(a) Digital processing

938

940

(b) Analog processing

946

$$i\hbar \frac{d|\psi\rangle}{dt} = \mathcal{H}|\psi\rangle$$

942

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

944

**Fig. 9D**

**Fig. 10**

EP 4 242 934 A1

Fig. 11A

Fig. 11B

**Fig. 12**

**Fig. 13A**

**Fig. 13B**

EP 4 242 934 A1

**EP 4 242 934 A1**

Europäisches Patentamt
European Patent Office
Office européen des brevets

# EUROPEAN SEARCH REPORT

Application Number

EP 22 16 0629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/320437 A1 (GAMBETTA JAY M [US] ET AL) 8 October 2020 (2020-10-08)<br>* abstract *<br>* paragraph [0001] *<br>* paragraph [0013] *<br>* paragraph [0056] *<br>* paragraph [0091] - paragraph [0115] *<br>* figures 5, 12 * | 1-14 | INV.<br>G06N10/60<br>G06N20/10<br>G06N10/40 |
| A | VOJTECH HAVLICEK ET AL: "Supervised learning with quantum enhanced feature spaces",<br>ARXIV.ORG, CORNELL UNIVERSITY LIBRARY, 201 OLIN LIBRARY CORNELL UNIVERSITY ITHACA, NY 14853,<br>30 April 2018 (2018-04-30), XP081174873,<br>DOI: 10.1038/S41586-019-0980-2<br>* abstract *<br>* page 13 * | 1-14 | |
| A | MARIA SCHULD: "Supervised quantum machine learning models are kernel methods",<br>ARXIV.ORG, CORNELL UNIVERSITY LIBRARY, 201 OLIN LIBRARY CORNELL UNIVERSITY ITHACA, NY 14853,<br>17 April 2021 (2021-04-17), XP081928483,<br>* abstract * | 1-14 | **TECHNICAL FIELDS SEARCHED (IPC)**<br><br>G06N |
| A | MARCELLO BENEDETTI ET AL: "Parameterized quantum circuits as machine learning models",<br>ARXIV.ORG, CORNELL UNIVERSITY LIBRARY, 201 OLIN LIBRARY CORNELL UNIVERSITY ITHACA, NY 14853,<br>18 June 2019 (2019-06-18), XP081383181,<br>* abstract *<br>* figures 3, 6 * | 1-14 | |

The present search report has been drawn up for all claims

| Place of search | Date of completion of the search | Examiner |
|---|---|---|
| The Hague | 23 August 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 0629

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2022

| Patent document cited in search report | | Publication date | Patent family member(s) | | Publication date |
|---|---|---|---|---|---|
| US 2020320437 | A1 | 08-10-2020 | AU 2020250811 | A1 | 30-09-2021 |
| | | | CA 3135537 | A1 | 08-10-2020 |
| | | | CN 113661501 | A | 16-11-2021 |
| | | | EP 3948689 | A1 | 09-02-2022 |
| | | | IL 286607 | A | 31-10-2021 |
| | | | JP 2022526072 | A | 23-05-2022 |
| | | | KR 20210132154 | A | 03-11-2021 |
| | | | SG 11202109785T | A | 28-10-2021 |
| | | | US 2020320437 | A1 | 08-10-2020 |
| | | | WO 2020201002 | A1 | 08-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200394550 A1
- EP 2021081737 W
- EP 21190216
- EP 22155513

**Non-patent literature cited in the description**

- **H. BUHRMAN et al.** Quantum fingerprinting. *Physical Review Letters,* 2001, vol. 87 (16), 167902